Europäisches Patentamt

European Patent Office

Office européen des brevets

(11) Publication number: **0 207 964**
**B1**

## EUROPEAN PATENT SPECIFICATION

(45) Date of publication of patent specification: **29.08.90**

(51) Int. Cl.⁵: **H 04 H 5/00**

(21) Application number: **86900503.3**

(22) Date of filing: **13.12.85**

(86) International application number:
**PCT/US85/02479**

(87) International publication number:
**WO 86/04201 17.07.86 Gazette 86/17**

(54) BROADCAST STEREO COMPANDING SYSTEM AND APPARATUS.

(30) Priority: **04.01.85 US 688854**
**04.01.85 US 688940**

(43) Date of publication of application:
**14.01.87 Bulletin 87/03**

(45) Publication of the grant of the patent:
**29.08.90 Bulletin 90/35**

(84) Designated Contracting States:
**AT BE CH DE FR GB IT LI LU NL SE**

(56) References cited:
US-A-3 067 292     US-A-4 485 483
US-A-4 338 491     US-A-4 534 054
US-A-4 376 916

JOURNAL OF THE AUDIO ENGINEERING
SOCIETY, vol. 33, no. 12, December 1985, pages
938-943, New York, US; E.L. TORICK et al.:
"Improving the signal-to-noise ratio and
coverage of FM stereophonic broadcasts"
JOURNAL OF THE AUDIO ENGINEERING
SOCIETY, vol. 33, no. 12, December 1985, pages
944-949, New York, US; D.W. GRAVEREAUX et
al.: "Reentrant compression and adaptive
expansion for optimized noise reduction"

(73) Proprietor: **Broadcast Technology Partners (a
partnership of the State of Michigan)
525 Woodward Avenue, Suite 100
Bloomfield Hills, Michigan 48013 (US)**

(72) Inventor: **CUGNINI, Aldo, G.
177 White Plains Road
Tarrytown, NY 10591 (US)**
Inventor: **GRAVEREAUX, Daniel, W.
602 Carter Street
New Canaan, CT 06840 (US)**
Inventor: **STEBBINGS, David, W.
19 Crest Road
Ridgefield, CT 06877 (US)**

(74) Representative: **Rackham, Stephen Neil et al
GILL JENNINGS & EVERY 53-64 Chancery Lane
London WC2A 1HN (GB)**

**Description**

## BACKGROUND OF THE INVENTION

This invention relates to FM broadcasting systems and, more particularly, to transmission techniques for increasing the channel capacity and coverage area of FM stereophonic broadcasting systems for both radio and television applications while maintaining compatibility with existing monophonic and stereophonic radio receivers and with the transmission standards for stereo television recently adopted by the Electronic Industries Association (EIA).

The potential of FM sound broadcasting has long been recognized, primarily due to its relative immunity to electromagnetic interference and its ability to provide full audio bandwidth with low noise. Although FM stereo adds a new acoustical dimension to radio reception, it does so only at the expense of serious degradation of signal-to-noise ratio. The noise penalty in stereophonic broadcasting is well known, there being several factors which contribute to the higher noise levels and coverage losses resulting from multi-channel sound transmissions. When a broadcast station converts to biphonic service, monophonic coverage is reduced because signal power must be divided among the various components of the more complex baseband signal. (The term "biphonic" will be used hereinafter to clearly differentiate two-channel broadcasting from other forms of stereophony such as triphonic and quadraphonic broadcasting.) The biphonic signal-to noise ratio because of the wide bandwidth of the composite signal containing the monophonic sum signal M, the pilot signal p, and the stereophonic difference signal S. With a baseband spectrum extending to 53kHz for biphonic transmissions, the noise level is particularly high because of the rising spectral characteristic due to frequency modulation. The so-called "triangular" noise spectrum increases 6dB per octave with increasing frequency of the composite signal, and although audio de-emphasis counteracts this somewhat, the noise problem is still severe. After demodulation, the noise components of the difference channel sub-carrier are added, statistically independent, to the noise already present in the monophonic signal during audio dematrixing.

Instead of here describing the factors that must be taken into account in estimating the theoretical loss of signal-to-noise ratio, attention is directed to United States Pat. No. 4,485,483 dated November 27, 1984 of Emil L. Torick and Thomas B. Keller for a summary of a number of studies that have been made of signal-to-noise degradation. In general, these studies conclude that there is a 26dB penalty for stereophonic programming with wide audio separation, whereas for monophonic receivers noise degradation is in the range from 1dB to 7dB. Such losses of signal-to-noise ratio result in a reduction in the effective area of coverage of a broadcast station, studies having shown that with biphonic transmission the two-channel reception range is only approximately one-half the monophonic reception range.

The above-mentioned patent describes a biphonic FM radio broadcasting system that is fully compatible with existing receivers and which through improvement of signal-to-noise significantly extends the area of coverage of an FM broadcasting station. In the disclosed system (hereinafter sometimes referred to as the "Torick/Keller system") the usual left and right signals are conventionally matrixed to obtain conventional sum (M) and difference (S) signals. The difference signal is used to amplitude-modulate a first sub-carrier signal and at the same time is applied to a compressor which compresses its dynamic range to produce a compressed difference signal S'. The compressed difference signal S' is used to amplitude-modulate a second sub-carrier signal of the same frequency but in quadrature phase relationship with the first. Suppressed-carrier, double-sideband modulation of each sub-carrier is employed, with the frequency of the sub-carrier signal being sufficiently high to assure a frequency gap between the lower sidebands of the modulated sub-carrier signals and the M signal. A conventional low-level phase reference pilot signal, lying within the aforementioned frequency gap, is employed for detection purposes at the receiver. The M signal, the two modulated sub-carrier signals, and the pilot signal are frequency modulated onto a high frequency carrier for transmission purposes. The receiver includes a demodulator for deriving the M signal, the normal difference signal S and the compressed difference signal S', and an expander for complementarily expanding the derived compressed difference signal. The expanded noise-reduced version of the difference signal is combined with the derived sum signal M to obtain the original left (L) and right (R) signals. The receiver also includes switch means for applying the normal difference signal, instead of the expanded version of the derived difference signal, to the combining means to enable the receiver for reproduction of conventional stereophonic signals.

In effect, then, the Torick/Keller system embodies the concept of companding a channel that is additional to that normally used for stereo and to code it in a way so as to not increase the bandwidth requirements for transmission. By companding the difference (L − R) signal, which gives 22dB to 26dB signal-to-noise improvement in the transmission chain, the stereo listener theoretically enjoys the same signal-to-noise ratio as does the conventional monophonic listener. This amount of reduction of received noise greatly increases the effective stereo service area; in general, the radius from the transmitter to the point at which an acceptable signal is no longer received is at least doubled as compared to that for conventional stereo, which means that four times the number of potential listeners will receive an acceptable signal.

In the application of stereophonic sound to television according to the system recently adopted by the Electronic Industries Association (EIA), the difference signal (L − R) is compressed by a dbx Inc. compressor to give the signal-to-noise improvement necessary to overcome the penalty in signal-to-noise

as compared to monophonic transmission. The compressed difference signal is used to amplitude-modulate a sub-carrier and the amplitude-modulated sub-carrier and the usual sum signal M, and a pilot signal, are frequency modulated onto a high frequency carrier for transmission purposes. Only the compressed difference signal is transmitted; that is, there is no transmission of an uncompressed difference signal. Thus, the signal can be compatibly received by existing monophonic television receivers, but cannot be received by existing FM stereo radio receivers; but since there had not previously been a standard for stereophonic television, compatibility was not a problem in the adoption of the EIA stereo television system.

A primary object of the present invention is to provide an FM stereophonic broadcasting system which exhibits a greater signal-to-noise improvement than that obtainable with the Torick/Keller system.

A corollary object is to provide an FM stereo broadcast system which better utilizes the greater channel capacity of the Torick/Keller system while still realizing its improved signal-to-noise advantage.

Still another object of the invention is to compatibily improve the stereo television system recently agreed to by the EIA, wherein only a compressed audio difference signal of reduced maximum amplitude is transmitted, by also transmitting an unchanged difference signal in quadrature.

Another object of the invention is to provide an adaptive expander for use in the receiver having the capability of adapting to any compressor characteristic that may be employed at the transmitter.

Yet another object is to provide an expander for use in an FM stereophonic system that is capable of adaptive frequency response decoding and adaptive attack and recovery time decoding so that all parameters of the original signal can be restored automatically regardless of the compression law used in transmission.

## SUMMARY OF THE INVENTION

The FM stereophonic broadcasting system according to the invention, whether for radio or television, is similar to the Torick/Keller system in that the usual difference signal S and a compressed difference signal S' are both transmitted. However, unlike the Torick/Keller radio system, in which only the expanded version of the received compressed difference signal is matrixed with the sum signal M to obtain the original L and R signals, the receiver according to the invention combines the usual difference signal S and the compressed difference signal S', expands, the resulting signal to obtain a noise-reduced difference signal and matrixes this noise-reduced difference signal with the derived sum signal M to obtain the original L and R signals. The signal content of S and S' being the same, combining them by summing increases the effective level of the received difference signal by 6dB, whereas the noise is increased only 3dB by virtue of the fact that the noise from the S channel and the noise from the quadrature S' channel can be considered as coming from two statistically independent noise sources whose outputs add as the square root of the sum of the squares; this means that the resultant noise in the sum signal (S + S') would be only 3dB, resulting in a net improvement of 3dB in signal-to-noise ratio. Alternatively, the process of decoding and adding the S and S' signals can be accomplished in a single operation by arranging the decoding axis to be at 45° with respect to the axes of transmission of the S and S' signals. In this case, the signal level from the decoder is increased by the square root of the sum of the squares of the S and S' signals, resulting in a received signal level increase of 3dB, yet with the same noise contribution as for a one-axis decoder. There is, therefore, a 3dB improvement in received signal-to-noise ratio, the same result as when both axes are decoded independently and summed after decoding.

The transmission of the unchanged normal difference signal S, coupled with the utilization at the receiver of both the normal and the compressed difference signal, allows the transmission of the compressed signal according to any desired companding law. For example, instead of being limited to the 2:1 slope typical of the "CX" compander described in commonly assigned United States Pat. No. 4,376,916, or other known companding systems, the invention makes possible the use of a compander system having an infinity-to-one ($\infty$:1) or similar companding characteristic which provides a subjective 10dB to 12dB improvement against noise pumping for a given amount of gain reduction over what is realizable with such prior art companders.

Additionally, because it is transmitted completely unchanged, the normal difference signal can be used at the receiver as a reference signal for controlling the level of the noise-reduced signal delivered by the expander so as to cause the amplitude of the sum signal (S + S') to equal the level of the normal difference signal and thus insure proper dematrixing with the received sum signal M. This feature offers the important advantage of the expander being adaptive to any compressor characteristic that might be employed at the transmitter, from which it follows that should improved companding characteristics be developed it would not be necessary to build new receiver decoders to exploit them; it would be necessary only to alter the compressor (at the transmitter) and control the output level of the "new" expander with the normal difference signal. Since the received unmodified signal S contains the complete information about the original (L − R) biphonic difference signal, the difference in the dynamic characteristics of the received S and S' signals gives a clue as to the values of these time constants; a "smart" decoder can be made sensitive to these values and be arranged to apply appropriate corrections. Also, since the signal S is unmodified, the relationship between the signal amplitudes of the various frequency bands of such companders as Dolby A and Dolby B or dBx for stereo television is also unchanged in this signal. It can, therefore, be used as a reference to re-establish the correct dynamic frequency response of any companding system.

The above-outlined improvements are also obtainable in the agreed EIA/dbx stereophonic television application by additionally transmitting an unchanged difference signal in quadrature with the compressed difference signal, which can be done with no loss in service area and without affecting compatibility for existing stereo television receivers. By exploiting both signals at the receiver in accordance with the principles outlined above, it is possible to design an improved receiver that would (a) receive an improved signal-to-noise ratio signal with less modulation of the noise; (b) enable the use of adaptive decoders; (c) require no more spectrum space; and (d) have improved high signal level signal-to-noise ratio.

## BRIEF DESCRIPTION OF THE DRAWINGS

Other objects, features, and advantage of the invention, and a better understanding of its construction and operation, will be had from the following detailed description when considered in conjunction with the accompanying drawings, in which:

FIG. 1 is a frequency diagram of the composite baseband signal developed in accordance with the principles of the present invention;

FIG. 2 is a simplified block diagram of a transmitting terminal for generating and transmitting the composite signal of FIG. 1;

FIG. 3 is a simplified block diagram of a feedback type of compressor useful in the system of FIG. 2

FIG. 4 is a simplified block diagram of a feed forward type of compressor useful in the system of FIG. 2;

FIG. 5 shows the steady state compression and expansion characteristics of one companding law useful in the FM broadcasting system according to the invention;

FIG. 6 shows the steady state compression and expansion characteristics of another companding law useful in the system;

FIG. 7 is a simplified block diagram of one embodiment of a receiving terminal constructed in accordance with the invention;

FIG. 8 is a simplified block diagram of an expander for use in the receiver system of FIG. 7;

FIG. 9 is a simplified block diagram of an alternative receiving terminal embodying the invention;

FIG. 10 are curves showing the level of the sum of the output signals of the two demodulators of the receiver shown in FIG. 7;

FIG. 11 are curves showing the level of the output signal from the single demodulator of the receiver shown in FIG. 9;

FIG. 12 are curves showing signal-to-noise ratio as a function of input level of the stereo difference signal for the two-axes demodulator of FIG. 7;

FIG. 12A is a curve showing the improvement in signal-to-noise ratio of the two-axes demodulator of FIG. 7 with an infinity-to-one compressor over that of a 3:1 compressor;

FIG. 13 are curves showing signal-to-noise ratio as a function of input level of the stereo difference signal for the single axis 45° demodulator of FIG. 9;

FIG. 13A is a curve showing the improvement in signal-to-noise ratio of the single axis demodulator of FIG. 9 with an infinity-to-one compressor over that of a 3:1 compressor;

FIG. 14 is a frequency diagram of the composite baseband signal developed in accordance with the invention for FM stereo television transmission.

FIG. 15 is a simplified block diagram of a receiving terminal including the adaptive expander of the invention;

FIG. 16 is a simplified block diagram of an alternative form of adaptive expander embodying the invention;

FIG. 17 is a simplified block diagram of a modified version of the adaptive expander shown in FIG. 16;

FIG. 18 is a block diagram of a feed-forward type of adaptive expander embodying the principles of the invention;

FIG. 19 is a simplified block diagram of a parallel-type frequency correcting adaptive expander;

FIG. 20 is a simplified block diagram of a series-type frequency correcting adaptive compander; and

FIG. 21 is a simplified block diagram of an adaptive expander having automatic adaptive time constants.

## DETAILED DESCRIPTION

Inasmuch as the FM stereophonic radio broadcasting system according to the invention is designed to be compatible with the existing two-channel stereo system approved by the Federal Communications Commission, it will be useful background for an understanding of the present invention to briefly review the basic principles of the existing system. In the current system, stereophonically related signals L and R are added together to form a sum signal M having frequencies up to about 15,000 Hz. To this is added a double-sideband suppressed 38kHz subcarrier signal $S\sin\omega t$, where $S = (L - R)$, and a 19kHz pilot signal for receiver synchronization purposes. The composite modulation signal can be written:

$$e_m = M + p\sin\frac{\omega t}{2} + S\sin\omega t \qquad \text{Eq.(1)}$$

where

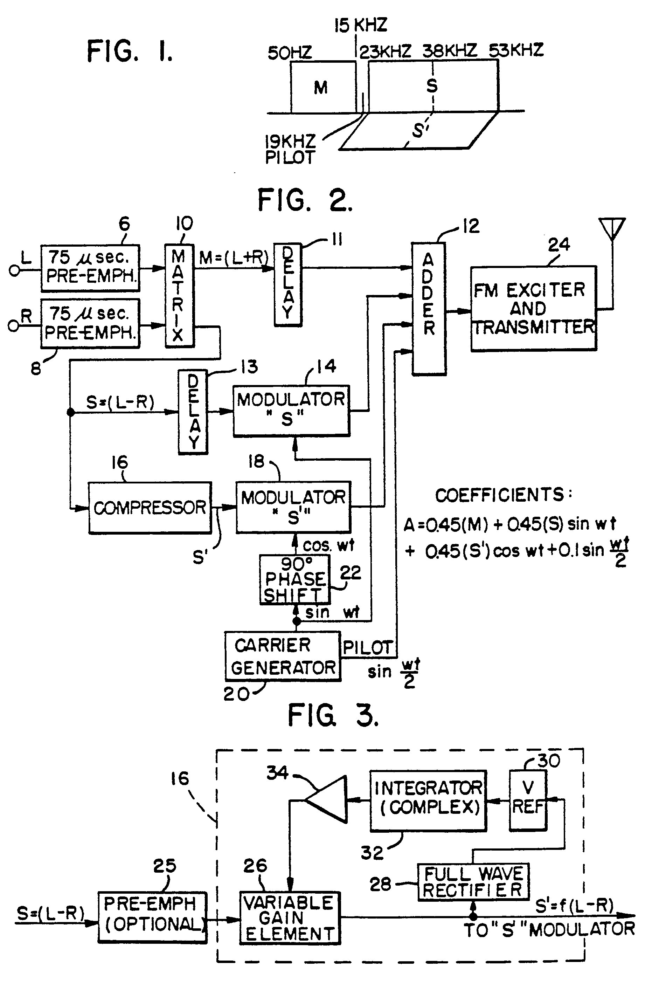

$\omega = 2\pi f_s = 2\pi 38\text{kHz}$, and p is the amplitude of the 19kHz pilot. It is seen from the baseband spectrum

4

illustrated in FIG. 1 that it comprises a monophonic channel M from about 50Hz to 15kHz, a 19kHz pilot, and a stereophonic difference channel Ssinωt from 23 to 53kHz.

In common with the Torick/Keller system, in the transmitter of the present system a compressed difference signal designated S' is added to the conventional composite FM signal. The compressed difference signal is conveniently transmitted as a double-sideband suppressed 38kHz quadrature sub-carrier signal S'cosωt. Thus, the composite baseband signal may be represented by the following equation:

$$e_m = M + psinωt + \frac{Ssinωt + S'cosωt}{2}$$ <div style="text-align: right">Eq. (2)</div>

where p represents the amplitude of the pilot signal and $ω = 2π.38kHz$. The quadrature sub-carrier requires no additional spectrum space and, as has been noted earlier, imposes only a small penalty in modulation potential, which is largely overcome by the present invention.

A transmitter for generating this composite signal is illustrated in FIG. 2 which, in the interest of simplicity, omits some of the more conventional transmitter circuits. The two audio frequency signals L and R, derived from separate sources (not shown), are applied via conventional 75 μ sec. pre-emphasis networks 6 and 8, respectively, to the inputs of a conventional matrix network 10 consisting, for example, of a network of summing amplifiers arranged to produce at the output terminals of the matrix the two audio signals M = (L + R) and S = (L − R). The monophonic sum signal M is applied via a first delay device 11 to one input to an adder 12, and the stereophonic difference signal S is applied via a second delay device 13 to the input of a first modulator 14, and also to the input of a compressor 16 of a companding system; the compressor may be one of several types which will be described later. The compressed difference signal from the compressor, designated S', is applied to the input of a second modulator 18, the output of which is delivered to adder 12 where it is linearly combined with the monophonic sum signal M and the signal from modulator 14. The delays introduced by delay devices 11 and 13 are such as to insure that the M signal and the two modulated signals arrive at the adder simultaneously.

The sub-carrier and pilot signals are derived from a carrier generator 20 which provides a sine wave signal having a frequency of 38kHz which is applied to modulator 14 and also to a phase shift network 22 of known construction for providing a 90° phase displacement between the sub-carrier signal applied to modulator 18 and the subcarrier applied to modulator 14. The modulators 14 and 18 comprise suppressed-carrier amplitude modulators of known construction which serve to amplitude-modulate the two sub-carriers with respective audio frequency signals so as to produce the two double-sideband, suppressed-carrier, amplitude-modulated sub-carrier signals Ssin ωt and S'cosωt. These two signals are then combined in adder 12 with the sum signal M and a 19kHz sine wave pilot signal, also derived from carrier generator 20. The composite signal produced at the output of adder 12 set forth in Eq. (2), having the amplitude coefficients shown in FIG. 2, is then applied to the FM exciter of a transmitter 22 and frequency modulated onto a high frequency carrier for transmission to one or more remote receivers. It will be noted that the amplitude coefficients of the signal components in common with conventional FM stereo are the same as for conventional FM stereo, and that the amplitude coefficient of the quadrature signal is also 0.45; that is, it is unnecessary to reduce the amplitude coefficients of signals M and S in order to avoid over-modulation of the transmitter. Modulator 14, designated the "S" modulator, receives the in-phase carrier, and the second modulator, designated modulator "S'", receives the quadrature sub-carrier.

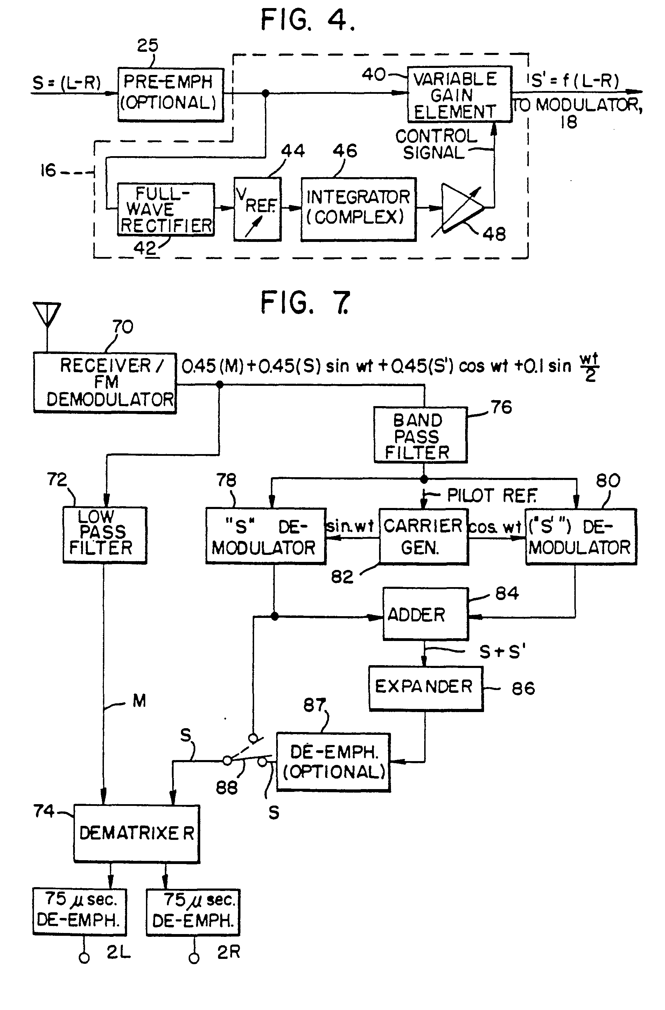

The compressor 16 may take the form of any of several known arrangements, including the feedback type illustrated in FIG. 3 and the feed-forward type shown in FIG. 4. Referring to FIG. 3, the difference signal (L − R) is applied to the compressor 16 via a pre-emphasis network 25, if required, and enters the input of a variable gain element 26 which is controlled by a direct voltage derived from its output signal, designated S', and which is a function of the difference signal (L − R). This output signal is fed to a control voltage generator circuit which includes a full-wave rectifier 28 for producing a direct voltage signal having a level proportional to the amplitude of the applied alternating signal S'. The control loop further includes a settable voltage reference device 30, which may be incorporated as part of the rectifier or, alternatively, may be inserted at some other point in the loop, for determining the knee of the transfer characteristic of the compressor. The direct voltage output from rectifier 28 is proportional to the amplitude of signal S' when the latter exceeds the threshold level $V_{ref}$, and is equal to the threshold voltage when the amplitude of signal S' is less than the threshold, so that input signals having amplitudes above the threshold are compressed and signals having amplitudes below the threshold are not compressed. The direct voltage produced by rectifier 28 and threshold device 30 is applied to an integrator 32 which may be of the type described in commonly assigned Pat. No. 4,376,916 which includes a network of at least three signal paths having differing time constants, the network having a common input terminal for receiving the rectified signal and a common output terminal at which the control signal for the variable gain element is developed. All except one of the signal paths each includes a diode for causing the respective path to be conductive only in response to the rectified signal exhibiting a change in amplitude sufficient to exceed a predetermined voltage, and the said one signal path conducts in response to any differential in voltage between the input and output terminals. The signal delivered by integrator 32 is amplified by a suitable amplifier 34 and applied as a control signal to variable gain element 26. The control signal delivered by the described network causes the output signal delivered by element 26 to not noticeably modify the information content of the source signal. The control signal generating loop has a high loop gain which enables generation of a very linear transfer characteristic, the nature of which will be discussed following description of the feed-forward type of compressor illustrated in FIG. 4.

Referring now to FIG. 4, the feed-forward type of compressor has the same basic elements as the just described feedback type but differs in that the control signal is derived from the input to a variable gain element 40 instead of from the output. Briefly, the difference signal S, with or without pre-emphasis as necessary, is applied to the input of variable gain element 40 and also to the input of a full-wave rectifier 42, which may have a settable voltage reference device 44 embodied therein for setting the knee of the transfer characteristic. The direct voltage from the rectifier and voltage reference device 44 is applied to an integrator 46 having the configuration described above in connection with FIG. 3, the output of which is amplified by a controllable amplifier 48 and then applied as a control signal to variable gain element 40. The compressed output signal S', the amplitude of which is a function of (L − R), is applied to the input of modulator 18. As is known, the feed-forward type of compressor is subject to two restrictions which do not apply to the feedback type: (1) in order for the input signal versus output signal to follow a given law the variable gain element itself must have a calibrated and prescribed transfer characteristic; and (2) the control signal must be developed with appropriate gain and offsets to match that law. In other words, the gains and offsets of the control signal generating loop and the variable gain element itself must all be chosen specifically to give the desired characteristic.

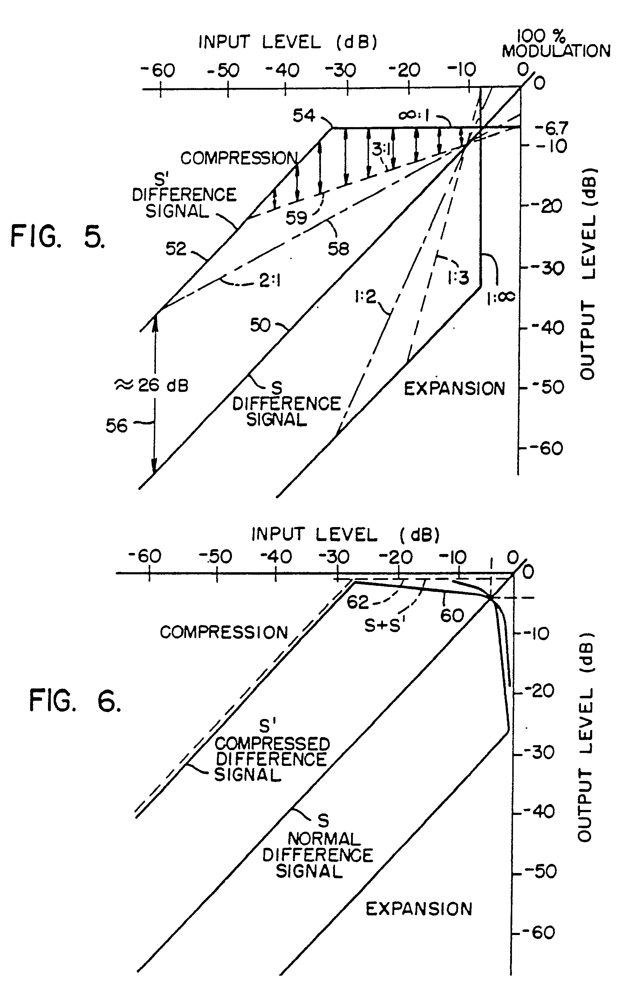

FIG. 5 is a conventional signal level diagram which depicts the steady state characteristics of an infinity-to-one companding system of which compressor 16 (of either the feedback or feed-forward type) forms a part. The input signals to be processed for compression or expansion are represented along the abscissa between −60dB and a standard operating level of 0dB. The absolute value of the input voltage rises along the abscissa from left to right up to the rated level. The output levels for compression or expansion are represented along the ordinate between −60dB and 0dB. The absolute value of the output voltage rises along the ordinate, from the bottom to the top, up to the rated level.

Curve 50 represents the relation between the output and input levels of the normal difference signal S which, since it is not subjected to compression, has a gain slope of one, and is included in the diagram primarily for reference purposes.

Curve 52 represents the relation between the output and input signal levels of the compressor 16. For input signal levels in the range between −60dB or lower and about −32.7dB, the characteristic 52 has a compression slope of one, so that input signal levels lower than −32.7dB relative to the rated level are not compressed.

For input signal levels higher than about −32.7dB relative to the rate level, the characteristic has a compression slope of infinity; that is, beginning at the knee 54 of the characteristic, in this example set at −32.7dB, the output level is the same regardless of the level of the input signal, which in this example is at a level of −6.7dB relative to the rated level. Although this results in the received signal level being ambiguous in that it may correspond to many levels, by combining the S and S' signals at the receiver the infinity-to-one companding law for the S' signal can be accurately decoded; more particularly, the S and S' signals are combined at the receiver in such a way that the combination of S and S' gives a final slope to the characteristic into the expander which differs from infinity-to-one. Thus, unlike currently conventional companding systems which require a prescribed curve for the input-output characteristic in order to build a complementary expander that will track the input signal without the need for a separate pilot tone or other means, the expander characteristic in the present system differs from the compressor characteristic by reason of the combination of the S and S' signals at the receiver which, in turn, enables the use of the infinity-to-one compressor characteristic in the first place. It can be seen that the dynamic range of input signals between −60dB and −32.7dB has been compressed to a range between −34dB and −6.7dB for the output signals, and that between the break point 54, which occurs when the amplitude of the input signals begin to exceed the threshold $V_{ref}$, the output level remains at −6.7dB. While the breakpoint 54 can be set at input levels other than −32.7dB, depending on the nature of the noise likely to be encountered in the transmission channel, it is important to the performance of the system that the slope of the characteristic be exactly one for input signal levels below the break point. The vertically oriented arrow 56 extending between the characteristic 50 for the S signal and the compressor characteristic 52 represents the approximately 26 dB gain increase in the S' difference signal as compared to the difference signal S required to compensate for the noise penalty for stereophonic programming relative to monophonic.

An important advantage of using the infinity-to-one compression law for the S' difference signal can be seen from a comparison of its characteristic with the 2:1 compression characteristic typically employed in the "CX" companding system described in Pat. No. 4,376,916, shown in the dash-dot line curve 58 and a 3:1 compression characteristic shown by the dashed line curve 59. Compared to the 3:1 compression characteristic, as indicated by the vertical arrows, the infinity-to-one compression characteristic 52 gives a 10dB to 12dB improvement against noise modulation or "pumping," often an anomoly of companding systems. Stated another way, the infinity-to-one compression law reduces the audibility of noise pumping yet still gives improved signal-to-noise ratio for input signals throughout the range from about −44dB to about 0dB. In particular, at the lower end of this range of levels, the ear is very sensitive to noise pumping caused by lack of sufficient program level to mask the noise so that slight variations in level of the program enables the ear to hear variations in the level of the noise. It is seen from comparison of characteristic 52 with the 2:1 characteristic 58 that the improvement is even greater; for example, at an input signal level of −30dB there is an improvement of about 15dB of output signal level relative to a compressor having the 2:1 characteristic.

A further advantage of the infinity-to-one compression law over the 3: 1 compression characteristic is that the knee 54 occurs at an input level of −32.7dB whereas the 3:1 curve of a "CX" expander has to have the knee set at −49dB in order to get the same total amount of compression for an acceptable signal level. Thus, in the case of a "CX" expander having a 3:1 compression law, by definition, gain variations are still occurring at input signal levels of −49dB, causing the operating signal-to-noise ratio level at that point to be much lower than in the case of the infinity-to-one characteristic, thus making the noise pumping all the more audible.

While the described infinity-to-one companding characteristic provides the listed advantages, it is possible, by virtue of utilizing both the S and S′ difference signals at the receiver, to use a greater than infinity-to-one characteristic for the S′ difference signal and thereby achieve additional advantages. More specifically, as shown in the signal level diagram of FIG. 6, it is possible to use a compressor having a characteristic 60 for the S′ difference signal which extends with a slope of one up to within a dB or two of 100% modulation and then gradually drops back from that level as the level of the S difference signal rises, such that addition of the S and S′ signals gives an infinity-to-one characteristic (depicted by dotted line characteristic 62) that is always maintained at a level such that the square root of the sum of the squares of signals S and S′ does not exceed 100% modulation. The curve 60 has a re-entrant characteristic in the sense that it starts to come down, from a break point at an input level of about −28dB, as the level of the S difference signal increases, and intersects the S difference signal curve at the −3dB point. This somewhat unusual characteristic can be quite easily derived by subtracting the difference signal S from the output of a regular infinity-to-one compressor having the characteristic illustrated in FIG. 5. This re-entrant characteristic not only permits maximum possible modulation of the 38kHz transmission signal, it also insures that the 38kHz subcarrier has substantially constant amplitude over a wide dynamic range of program level; that is, this characteristic makes it possible to transmit at about 100% modulation all of the time, which is the best that can be done in any communication system.

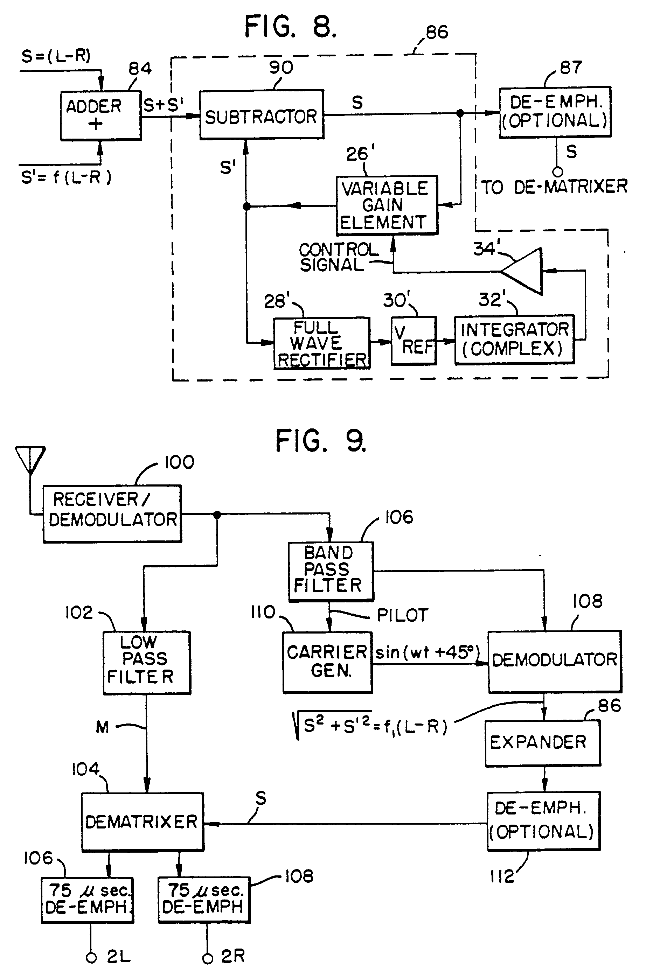

A first embodiment of a receiver according to the invention is shown in the block diagram of FIG. 7 and, again, in the interest of simplicity, some of the more conventional FM receiver circuits (e.g., RF and IF stages and discriminator networks) have not been shown and will be only briefly mentioned as necessary. A received FM signal is amplified in the RF and IF stages (not shown) of a receiver/FM demodulator 70, and demodulated in any of the known FM detection circuits (not shown) to derive the audio signals contained in the received signal, namely, the signals M, S, S′ and the pilot, each with the indicated amplitude coefficient. The monophonic sum signal M is separated from the higher frequency components of the composite signal by a low-pass filter 72 and applied as one input to a de-matrixer circuit 74 of conventional design. The remaining components of the composite signal are selected by a bandpass filter 76 designed to pass frequencies in the band from 19kHz to 53 kHz and to reject frequencies below this band, and then applied to an S demodulator 78 and to an S′ demodulator 80. The pilot signal is derived by means (not shown) and applied to a carrier generator 82 which regenerates quadrature versions thereof, $\sin\omega t$ and $\cos\omega t$, which are applied to demodulators 78 and 80, respectively. So as to derive the unchanged difference signal S and the compressed difference signal S′, which has the function of (L − R) established by the compressor at the transmitter, the S and S′ signals are summed in an adder 84 and the sum signal is applied to an expander 86 wherein the signal S′ is complementarily expanded (in a manner to be described) to obtain the difference signal S at its output for delivery via an optional de-emphasis circuit 87 (if required) to a second input to de-matrixer 74 when a switch 88 is in the position shown. The de-matrixer 74, which may be of the conventional construction illustrated in the aforementioned Torick/Keller patent including an adder and a subtractor, combines the M and noise-reduced S signals to produce as outputs the signals 2L and 2R, the amplitude of which is then reduced by one-half to obtain signals L and R for application to the left and right loudspeakers, respectively (not shown), all typical of the mode of operation of a conventional two-channel FM receiver.

In addition to operating as just described, the receiver is fully compatible with conventional monophonic and two-channel (biphonic) stereophonic broadcasts. When a monaural broadcast is being received, the output of the receiver/FM demodulator 70 comprises only the monaural signal M consisting of (L + R). This signal is selected by low pass filter 72 and applied to de-matrixer 74, and since no signal is applied to the second input of the dematrixer, only the signal M appears at each output of the de-matrixer for application to the left and right loudspeakers, respectively.

For enabling the receiver to reproduce a received conventional two-channel stereo signal, the switch 88 is actuated, preferably automatically, from the position shown to the dotted line position so as to connect the output of the S demodulator 78 to the second input of dematrixer 74. Such automatic switching can be achieved, for example, by any of several known techniques, such as modulating the pilot tone, or adding a separate identification signal, when a compressed difference signal is transmitted; a detector in the receiver (not shown) responsive to the identification signal produces a signal for actuating the switch 88 from the solid line position to the position shown by dotted line in FIG. 7. Thus, when a conventional two-channel stereo signal is received, the M signal, as before, is applied to one input of dematrixer 74, and the S signal, derived from demodulator 78, are combined in the de-matrixer to produce output signals 2L and 2R, the amplitude of each of which is reduced by one-half prior to application to the left and right loudspeakers, respectively.

FIG. 8 is a block diagram of the expander 86 of FIG. 7 for complementarily expanding a signal compressed at the transmitter with the feedback type compressor shown in FIG. 3. Repeating a portion of the block diagram of FIG. 7, the S and S' signals from demodulators 78 and 80, respectively, are summed in adder 84 and applied to the expander 86 which essentially comprises a compressor of the type shown in FIG. 3 and a subtractor circuit 90. The subtractor 90 is arranged to subtract from the sum signal (S + S') a noise-reduced signal S' derived by feeding the output signal from subtractor 90 through a variable gain element 26' to the subtractor and controlling the gain of variable gain element 26' with a control signal derived from its output signal, which is the same as the signal applied to subtractor 90. The control signal generating loop is the full equivalent of the comparable control loop of the compressor shown in FIG. 3 and accordingly its components are identified by corresponding, but primed, reference numerals. The subtractor 90 may be a simple comparator amplifier having high stability, and if the other components are identical to corresponding components of the compressor the expander will be complementary with the compressor. The requirement that the signal S appear at the output of subtractor 90 while the signals at its two inputs are (S + S') and S', respectively, is met by the variable gain element 26' having a very low phase delay at the highest audio frequency encountered, which is about 15 to 16kHz. In other words, the delay through the variable gain element must be less than a few degrees at 16kHz, or a few microseconds. In practice, the subtractor 90 preferably comprises an operational amplifier having a transit delay of the order of 100 nanoseconds, and similarly for variable gain element 26', thereby to enable subtraction of two signals which seemingly have not yet arrived. The resultant output signal S, then, is the sum of the S signal and the noise-reduced S' signal which, by virtue of the noise reduction in the S' signal when the S and S' signal levels are equal, has a signal-to-noise ratio 3dB better than if only the usual difference signal (L − R) were used. Further details of the received improvement in signal-to-noise ratio as a function of input signal level will be described later. The output signal from subtractor 90 is applied to the optional de-emphasis circuit 87, if required, and then applied to de-matrixer 74. It will be understood that the de-emphasis circuit would be inserted only if pre-emphasis was employed in the transmission chain.

Referring now to FIG. 9, there is shown in block diagram an alternative form of receiver in which demodulation and summing of the unchanged difference signal S and the compressed difference signal S' is accomplished by using a single quadrature demodulator having a decoding axis set at 45° to the normal carrier generator axes of sinωt or cosωt. Again, some of the more conventional FM receiver circuits (e.g., RF and IF stages and discriminator networks) have not been shown and will be only briefly mentioned. A received FM signal is amplified in the RF and IF stages (not shown) of a receiver/FM demodulator 100, and demodulated in any of the known FM detection circuits (not shown) to derive the audio signals contained in the received signal, namely, the signals M, S and S' and the pilot. The monophonic sum signal M is separated from the higher frequency components of the composite signal by a low-pass filter 102 and applied as one input to a dematrixer circuit 104 of conventional design. The remaining components of the composite signal are selected by a bandpass filter 106 designed to pass frequencies in the band from 19 Khz to 53Khz and to reject frequencies below this band. The S and S' signals are applied to a quadrature demodulator 108 having a demodulation axis set at 45°, and the pilot signal is derived (by conventional means not shown) and applied to a carrier generator 110 which regenerates responsively thereto a signal sin (ωt + 45°) (or, alternatively, cos (ωt − 45°)) which is applied to demodulator 108. By using the single quadrature demodulator, the demodulation and summing of the S and S' signals take place simultaneously, in one shot, and, as indicated, the output signal from the demodulator will be the square root of the sum of the squares of the S and S' signals, and a function of the (L − R) difference signal applied to the transmitter. This signal is applied to the expander 86, which may have a configuration similar to the expander shown in FIG. 8, wherein the signal is expanded to obtain a noise-reduced output signal corresponding to the original difference signal S. This signal is applied to an optional de-emphasis network 112 (if required) and then applied to a second input to de-matrixer 104 for combination with the sum signal M to produce as outputs the signals 2L and 2R, the amplitude of which is then reduced by 1/2 to obtain signals L and R for application to the left and right loudspeakers, respectively (not shown), all typical of the mode of operation of a conventional two-channel FM receiver, including subjecting the de-matrixer output signals to the usual 75 μ sec de-emphasis in networks 106 and 108.

Although a 45° decoder has been described in detail by way of example, it will be understood that demodulation axes other than 45° may be used. The results will be similar except for the introduction of a ratio between the gain coefficients for the S and S' signals in the summing action. Such other axis angle may be preferable over the 45° axis angle under certain conditions.

Although the system of FIG. 9 cannot reproduce a conventional two-channel stereo signal, it is fully compatible with conventional monophonic broadcasts. When a monaural broadcast is being received, the output of receiver/FM demodulator 100 comprises only the monaural signal M consisting of (L + R). This signal is selected by low-pass filter 102 and applied to de-matrixer 104, and since no signal is applied to the second input of the dematrixer, only the signal M appears at each output of the de-matrixer for application to the left and right loudspeakers, respectively.

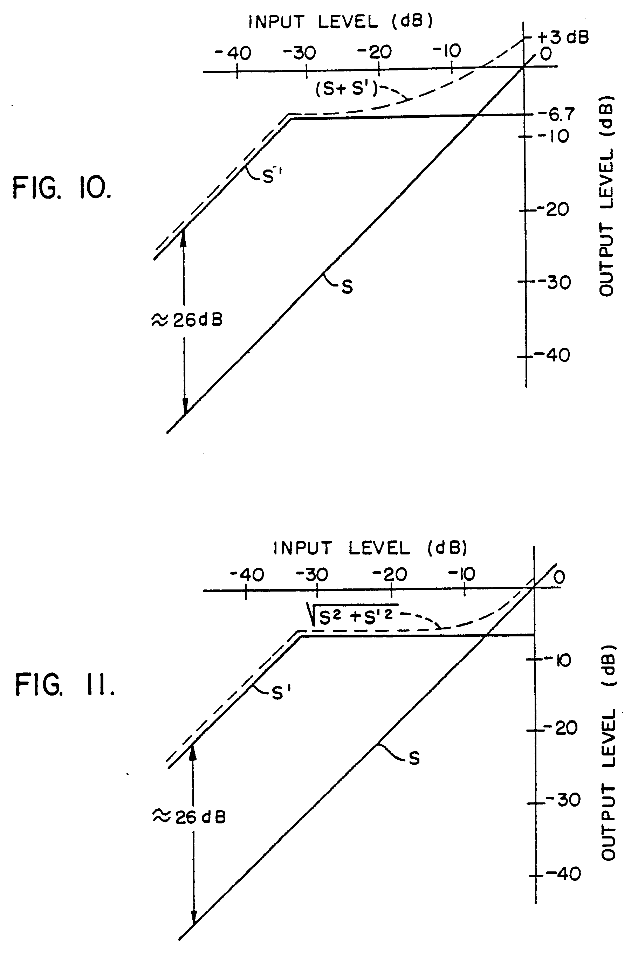

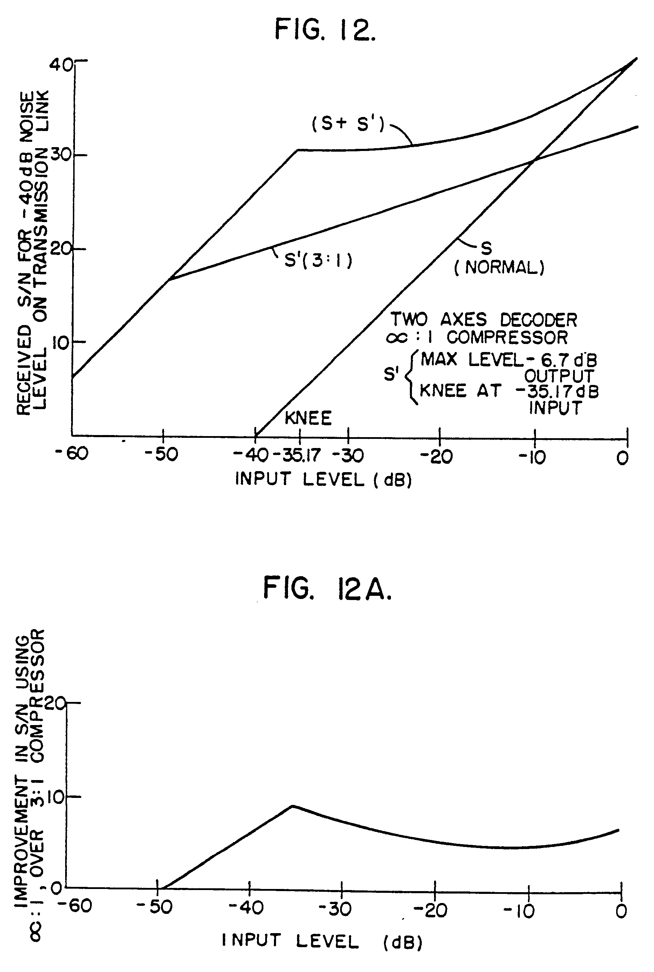

It will have been seen from the foregoing that there are basically two different ways of using the S signal in the receiver's decoder: (1) two-axes decoding shown in FIG. 7 using sinωt and cosωt demodulators for respectively deriving the S and S' signals, adding S and S' together and expanding the sum, and (2) 45° axis decoding shown in FIG. 9, in which demodulation and summing of the S and S' signals both happen in one process and expanding the resulting signal. The relative merits of these two approaches will be seen from a comparison of FIGS. 10 and 11 which respectively illustrate the level of the output of the adder 84 in the two-axes demodulator of FIG. 7 (i.e., S + S') and the level of the output signal from the single 45° axis decoder of FIG. 9 (i.e., the square root of the sum of $S^2 + S'^2$), both as a function of input level. Both figures include the usual input/output curves, the curve for the unchanged difference signal S having unity slope and the curve S' for the difference signal compressed with the infinity-to-one compressor described earlier. The knee of the compressor is set at about −32.7dB, above which the output level is −6.7dB regardless of the level of the input signal. Referring specifically to FIG. 10, the dotted line curve labeled (S + S') depicts the level of the output signal from adder 84 (FIG. 7) as a function of input signal level and is seen to gradually increase from −6.667dB at an input level of about −32.7dB, to about 3.3dB for 0dB maximum input signal level. As has been described previously, separate demodulation of the two axes has the effect of introducing two statistically independent random noise generators which together add 3dB of noise to the transmission link noise but, since the output signal rises by 6dB at the −6.7dB input level, there is a net improvement of 3dB in signal-to-noise ratio.

Turning now to FIG. 11, it will be noted that the dotted line curve labeled

$$\sqrt{S^2 + S'^2},$$

for input S and S' signals identical to those depicted in FIG. 10, also increases gradually, but not as steeply as the dotted line curve in FIG. 10, to a level of about + 0.8dB at an input level of 0dB, as compared to the plus 3.3dB in FIG. 10. However, the signal-to-noise ratio is the same as for the other case because the noise contributed by the demodulator, since it has but a single axis, will be 3dB less than for the two-axes case in which there was an increase in signal level but also more noise. In the single axis demodulator of FIG. 9, not only does the demodulator contribute less noise than do the two demodulators of the FIG. 7 system, but there is a lower output signal level because of the fact that the demodulator derives the square root of $(S^2 + S'^2)$.

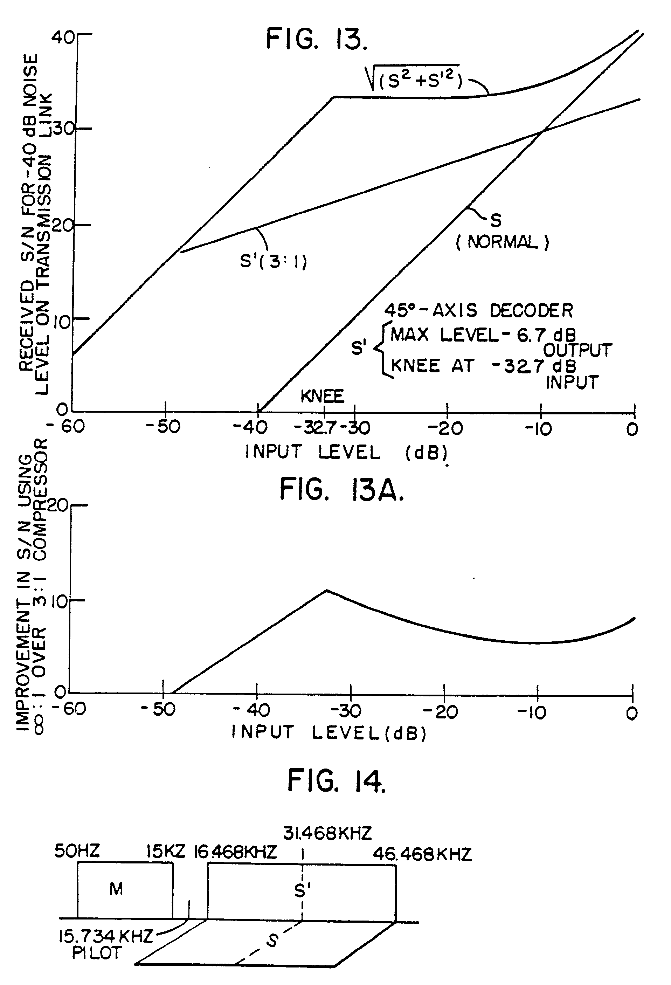

FIGS. 12 and 13 respectively depict signal-to-noise ratio as a function of input signal level, with an arbitrarily chosen −40dB noise level on the transmission medium, for the two-axes demodulating system of FIG. 7 and the single-axis modulator of the FIG. 9 receiver. Each of these figures show three curves: (1) a straight line labeled S having unity slope relating the unchanged difference signal to signal-to-noise ratio; (2) a curve labeled S' which depicts signal-to-noise ratio as a function of the level of the difference signal compressed by 3:1 compressor; and, (3) a curve labeled (S + S') in FIG. 12, and labeled

$$\sqrt{S^2 + S'^2}$$

in FIG. 13, which depict signal-to-noise ratio as a function of input level for the case where the S' signal is compressed according to the infinity-to-one compression law. Considering first the third curve of FIG. 13, which shows the signal-to-noise ratio for the single axis 45° decoder, it is seen that the signal-to-noise ratio is improved at the higher input signal levels, and that at 0dB input level the signal-to-noise ratio is slightly better than it is for the unchanged difference signal S; this is the result of taking the square root of the sum of the squares of the unchanged and compressed difference signals.

The same curve in FIG. 12, for the case in which the unchanged and compressed difference signals are derived from separate demodulators, there is a noise contribution from two axes, or 3dB more noise than in the single-axis case, and, furthermore, the actual received signal level is now (S + S'), which does not involve squares and square roots; thus, the derivation of the exact signal-to-noise ratio as a function of signal level involves a different set of calculations than for the corresponding curve for the single-axis case.

The shape of the curve for the two cases is generally the same but they differ by one or two dB here and there, as will best be seen from a comparison of FIGS. 12A and 13A which show the improvement in signal-to-noise ratio realized from using an infinity-to-one compressor instead of a 3:1 compressor for the two-axes demodulator case and the single 45° axis demodulator case, respectively. It will be noted in both figures that at input levels of about −49dB the signal-to-noise improvement of the infinity-to-one compressor goes to zero; this stems from the fact that in order to have a fair comparison the signal level performance was arbitrarily chosen such that in the absence of signal, the background noise level will set the infinity-to-one compressor to have the same noise improvement as the 3:1 compressor, that value being about 26dB of noise improvement. Also the maximum signal levels for both were arbitrarily set at the same value of −6.7dB, as was the output for maximum input signal level. The curves of FIGS. 12A and 13A are also of the same basic shape, but have differences in detail which graphically show the differences between the curves of FIGS. 12 and 13, most notably at the −35dB input level, where the single axis 45° decoder has about a 2dB advantage in the improvement as compared to the two-axes decoding method. The reason for this is the contribution of noise by the two demodulation axes, which causes the slightly lower received signal-to-noise ratio for the two-axes case. However, the 9dB improvement in signal-to-noise ratio as compared to a "CX" compressor, for example, is still significant.

Besides its signal-to-noise superiority over the two-axes demodulator, the single 45° axis decoder has the further advantage that conventional stereo receivers currently utilize a single-axis decoder, albeit one fed by a sinωt signal rather than the sin(ωt + 45°) required for the demodulator of FIG. 9. Furthermore, the circuit is somewhat less expensive to manufacture in that less components are required for demodulating and summing in a single operation.

As has been briefly discussed previously, the principles of the present invention are also applicable to the recently agreed EIA/dBx stereo television system. As shown in FIG. 14, the baseband spectrum of this system comprises a monophonic channel M from about 50Hz to 15kHz, representing the sum of stereophonically related left and right signals, and a compressed stereophonic difference signal S' from 23kHz to 53kHz, which is transmitted as a double-sideband suppressed sub-carrier signal S' sinωt for example (or S' cosωt). The baseband signal also includes a pilot signal positioned in the gap between the M channel and the difference signal channel. The pilot frequency is the horizontal line frequency of the NTSC television system, namely, 15.734kHz, and the sub-carrier frequency is the second harmonic of the pilot frequency, or 31.468kHz.

In accordance with the present invention, the baseband signal would additionally include an uncompressed difference signal S transmitted as a double-sideband suppressed kHz sub-carrier in quadrature with the compressed difference signal sub-carrier (so as not to require any additional spectrum). This composite signal would be frequency modulated onto a high frequency carrier for transmission purposes, using a transmitter substantially as shown in FIG. 2. Because the signal includes the sum signal M and the compressed difference signal S', it is compatible with existing EIA/dbx receivers, and there would be no loss in service area. Unlike the EIA/dbx stereo television receiver, in which only the expanded version of the received compressed difference signal is matrixed with the sum signal M to obtain the original left and right channel signals, the receiver would combine the uncompressed difference signal S and the compressed difference signal S', using, for example, the adaptive expander described herein below to achieve the above-described improvement in signal-to-noise ratio in the received signal and with less noise pumping. Such adaptive decoder is controlled by the uncompressed, and thus unmodified, difference signal and is, therefore, capable of recovering dynamic level, frequency, and attack and recovery time constant information contained in the original difference signal.

It should now be evident that the transmission of the uncompressed difference signal S along with a compressed version S' of the difference signal, and the utilization of both at the receiver to obtain a noise-reduced difference signal, provides several improvements in FM stereophonic radio and television broadcasting systems including (1) increased channel capacity, (2) improved received signal-to-noise ratio as compared to currently available companding systems and (3) the ability to decode the uncompressed difference signal and the compressed difference signal either separately or together, all of these advantages being realizable while maintaining compatibility with existing FM and biphonic receivers in the case of radio, and with the EIA/dbx system in the case of television. As applied to FM stereo radio, the utilization of both compressed and uncompressed difference signals at the receiver provides the further advantage of enabling the use of any of several companding characteristics, with their attendant advantages, including the infinity-to-one and re-entrant characteristics shown in FIGS. 5 and 6, as well as the use of adaptive expanders which will now be described.

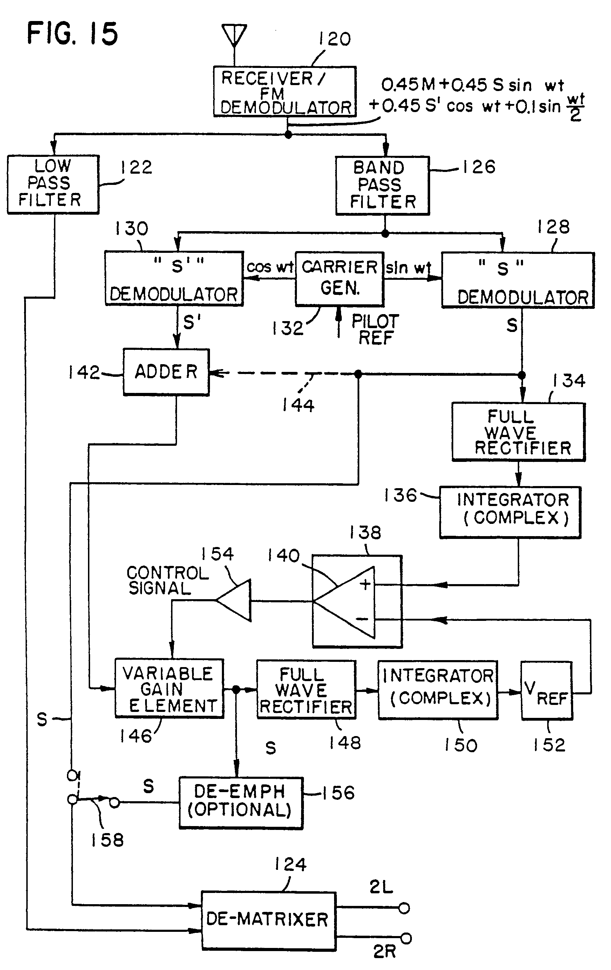

FIG. 15 is a block diagram of a receiver in association with a preferred form of adaptive expander according to the invention. Again, for purposes of simplicity, some of the more conventional FM receiver circuits (e.g., RF and IF stages and discriminator networks) have not been shown and will be only briefly mentioned as necessary. A received FM signal is amplified in the RF and IF stages (not shown) of a receiver/FM demodulator 120, and demodulated in any of the known FM detection circuits (not shown) to derive the audio signals contained in the received signal, namely, the signals M, S, S' and the pilot signal, each with the indicated amplitude co-efficient. The monophonic sum signal M is separated from the higher frequency components of the composite signal by a low-pass filter 122 and applied as one input to a de-matrixer circuit 124 of conventional design. The remaining components of the composite signal are selected by a bandpass filter 126 designed to pass frequencies in the band from 19kHz to 53kHz and to reject frequencies outside this band, and then applied to an "S" demodulator 128 and an "S'" demodulator 130. The pilot signal is derived by known means (not shown) and applied to a carrier generator 132 which regenerates quadrature versions thereof, namely, sinωt and cosωt, which are applied to demodulators 128 and 130, respectively, so as to obtain the signals S and S' (which has the function of (L − R) established by the compressor at the transmitter), respectively.

The availability at the receiver of both the unchanged difference signal and the compressed version thereof enables the use of an expander that adapts to the compression characteristic, whatever its form, this being accomplished by using the received unchanged difference signal S as a reference level for developing a control signal for a variable gain element connected to receive the compressed difference signal S' and for producing a noise-reduced difference signal for application to dematrixer 124.

In the embodiment of the expander shown in FIG. 15 the received unchanged difference signal S is full-wave rectified by a rectifier 134 to produce a direct current signal having a level proportional to the amplitude of the difference signal S. This direct current signal is applied to an integrator 136 which preferably is of the complex form described in the aforementioned United States Pat. No. 4,376,916. The output signal from integrator 136 which describes the envelope information of the unchanged difference signal S, is applied as one input to a comparator 138 which, for example, may be an operational amplifier 140, with the signal from integrator 136 applied to its positive input.

The compressed difference signal S' produced at the output of demodulator 130 is applied as one input to an adder 142 in which it may, if desired, but not necessarily, be added to the unchanged difference signal S; the dotted line connection 144 signifies the optionality of adding the two signals together at this point. Assuming that the unchanged difference signal is not added to the compressed difference signal, the compressed difference signal is simply transmitted to the input of a variable gain element 146, the output of which is applied to a second full-wave rectifier 148 which produces a direct current output signal having a level proportional to the amplitude of the signal appearing at the output of variable gain element 146. This direct current signal is applied to a second integrator 150, which may have the same construction as integrator 136 but, on the other hand, it need not have the same time constants as those used in integrator 136, nor those used in compressor 16 at the transmitter, the reasons for which will shortly become evident. A settable reference voltage level for this loop is established by a device 152 labeled $V_{ref.}$ which element may be embodied in the rectifier circuit 148. The signal developed in the chain including rectifier 148 and integrator 150 is applied as a second input to comparator 138, more specifically, to the negative input of operational amplifier 140. Any output signal from comparator 138 representing a difference in the amplitude of the two applied signals is amplified by a suitable amplifier 154 to produce a control signal which is applied to the control element of variable gain element 146 to control the gain thereof.

In operation, if the levels of the output signals from integrators 136 and 150 are the same, there will be no change in the magnitude of the control signal applied to variable gain element 146 which, in turn, signifies that the level of the output signal from the variable gain element 146 corresponds to that of the unchanged difference signal S. Viewed in another way, the function of comparator 138 is analogous to that of the threshold level of conventional expanders in that no change is made to the voltage level determined by the unchanged difference signal S until the signal level is above the so-called knee of the transfer characteristic. In the present circuit, the threshold, instead of being a preset fixed signal as is the case in conventional expanders, is a signal derived from the unchanged difference signal S, which, of course, varies in amplitude with certain attack and recovery times, but is at the level that the compressed signal S' should be. Thus, instead of there being a fixed reference voltage, the comparator 138 provides a changing reference level which dynamically varies with the changes in level of the unchanged difference signal S itself. The purpose of the $V_{ref.}$ device 152 is to establish a fixed gain difference equal to the fixed gain difference of the compressor employed at the transmitter so as to preclude variable gain effects on signals below a certain level, that is to say, to provide the equivalent of a "knee" to offset errors that could occur if the signal-to-noise ratio of the difference signal S is not sufficiently high. At input signals levels above such "knee", the level of the signal appearing at the output of variable gain element 146 is determined by the amplitude of the control signal developed in comparator 138 which, in turn, is dependent on the amplitude of the unchanged difference signal S. By virtue of controlling the gain of variable gain element 146 with a control signal proportional to the difference between the level of the compressed difference signal and the unchanged difference signal, the output of variable gain element 146 is the signal S, except that it has been subjected to noise reduction by reason of the expansion of the compressed difference signal that takes place in the control loop. The signal S produced at the output of variable gain element 146 is applied to the input of an optional de-emphasis circuit 156 (which is used only if preemphasis is used in the transmitter) and the output thereof is applied via a switch 158 to the second input of dematrixer 124.

The level of the signal S appearing at the output of variable gain element 146 is set by the $V_{ref.}$ device 152 and amplifier 154 to be equal to the level of the received unchanged difference signal S and using that signal as a reference level gives the expander the important advantage of being capable of adapting to any of a wide variety of companding laws. Thus, in the event a new type of compression transfer characteristic were to be developed in the future, it would not be necessary to scrap the described expander and replace it with a new receiver expander in order to take advantage of the new transfer characteristic. Because its operation depends only on the level of the unchanged difference signal S, any type of compression law currently available, or as may be developed in the future, would be satisfactorily decoded by the adaptive system of FIG. 15.

Unlike most existing companding systems, which require a very specific law for compression and a specific complementary law for expansion to achieve satisfactory performance, this adaptive system is not critically sensitive to the compression law, and even time constants are not as important, because the receiver always has a reference level derived from the unchanged difference signal S.

Reverting now to FIG. 15, in addition to operating as previously described, the receiver is fully compatible with conventional monophonic and two-channel (biphonic) stereophonic broadcasts. When a monoaural broadcast is being received, the output of receiver/FM demodulator 120 comprises only the monaural signal M consisting of (L + R). This signal is selected by low pass filter 122 and applied to dematrixer 124, and since no signal is applied to the second input of the de-matrixer, only the signal M appears at each output of the de-matrixer for application to the left and right loudspeakers, respectively.

For enabling the receiver to reproduce a received conventional two-channel stereo signal, the switch 158 preferably is automatically actuated from the position shown to the dotted line position so as to connect the output of demodulator 128 to the second input of dematrixer 124. Such automatic switching can be achieved, for example, by any of several known techniques, such as modulating the pilot tone, or adding a separate identification signal, when a compressed difference signal is also being transmitted; a detector in the receiver (not shown) responsive to the identification signal produces a signal for actuating the switch 158 from the solid line position to the dotted line position. Thus, when a conventional two-channel stereo signal is received, the M signal, as before, is applied to one input of de-matrixer 124 and the S signal derived from demodulator 128 are combined in the de-matrixer to produce output signals 2L and 2R, the amplitude of each of which is then reduced by one-half prior to application to the left and right loudspeakers.

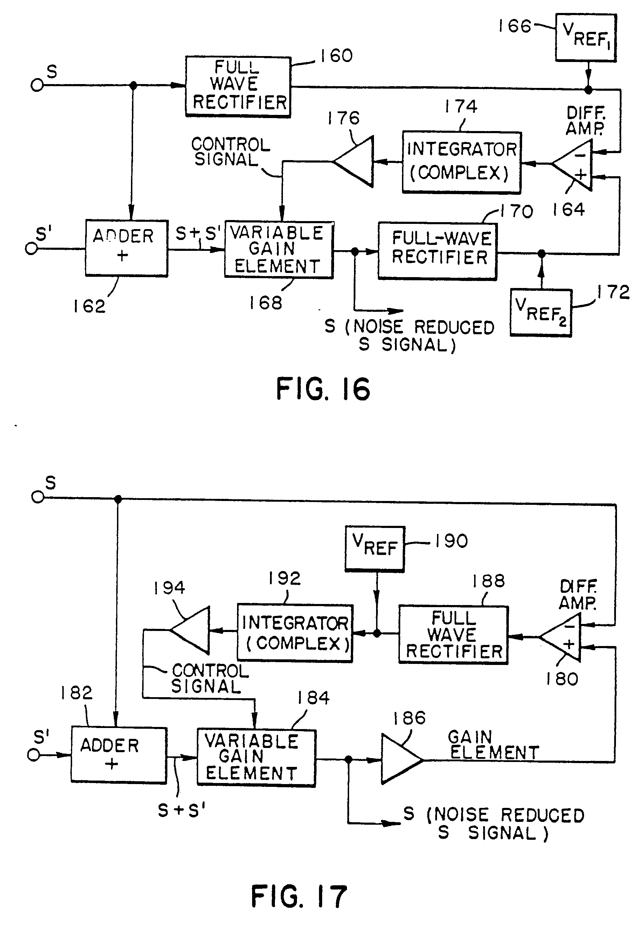

FIG. 16 shows an alternative configuration of the adaptive expander of FIG. 15, the difference being that instead of having two integrators, each following a respective full-wave rectifier and the outputs of the integrators applied to the comparator, the outputs of the rectifiers are applied to the comparator and its output applied to a single integrator. More particularly, the uncompressed difference signal S from demodulator 128 is applied to a first full-wave rectifier 160 and is also applied as one input to an adder 162 in which it is preferably added to the compressed difference signal S' from demodulator 130. The direct current signal from rectifier 160, which has a level proportional to the amplitude of the difference signal S, is applied to one input of a comparator, such as a difference amplifier 164. A settable reference voltage level for this loop is established by a device 166 labeled $V_{ref.1}$, which element may be embodied in the circuit of rectifier 160, and the purpose of which will be described presently. The signal from adder 162, representing the sum of signals S and S', is applied to the input of a variable gain element 168, the output of which is applied to a second full-wave rectifier 170 which produces a direct current output signal having a level proportional to the amplitude of the output signal from variable gain element 160. This direct current signal is applied to the other input of difference amplifier 164. A second voltage reference device 172, designated $V_{ref.2}$, establishes a reference voltage level for this loop. Any output signal from the comparator representing a difference in the amplitude of the two applied signals (after taking into account the reference voltage levels established by elements 166 and 172) is applied to an integrator 174, preferably of the complex type described above. The output signal from integrator 174 is amplified by a suitable amplifier 176 to produce a control signal which is applied to the control element of variable gain element 168 to control the gain thereof. As in the expander of FIG. 15, the function of the difference amplifier is analogous to that of the threshold level of conventional expanders in that no change is made to the voltage level determined by the unchanged difference signal S until the signal level is above the knee of the transfer characteristic. Voltage reference $V_{ref.1}$ is provided to limit the lower knee of the expander as in conventional expanders, and $V_{ref.2}$ is provided to cut off its associated loop, because otherwise the loop gain would try to make the output of variable gain element 168 to be constant at the level of the uncompressed difference signal S. Otherwise, the operation is similar to that of the adaptive expander of FIG. 15 and produces a noise-reduced difference signal S at the output of variable gain element 168 for application to de-matrixer 124.

FIG. 17 shows yet another implementation of the same basic adaptive expander which effects a saving in components as compared to either of the previously described implementations in that it requires only one full-wave rectifier and one complex integrator to achieve substantially the same results. More particularly, in this case the uncompressed difference signal S is directly applied to one input of a difference amplifier 180 and is added to the compressed difference signal S' in an adder 182 to produce a sum signal which is applied to the input of a variable gain element 184. The output signal from variable gain element 184 is applied to a gain element such as an amplifier 186, the output of which is applied to the second input of difference amplifier 180. Any resulting difference signal is full-wave rectified by a rectifier 188 and the resulting direct current signal, after level adjustment by a voltage level setting device 190, is applied to an integrator 192, again of complex type, the output of which is amplified by a suitable amplifier 194 to develop a control signal for variable gain element 184. As before, the output of the variable gain element is a noise-reduced signal S for application to the dematrixer.

The gain element 186 is included to avoid signal ambiguity at the output of full-wave rectifier 188 which would occur unless steps are taken to make sure that the signal from variable gain element 184 is always either larger or smaller than the difference signal S. Otherwise, if the two signals applied to difference amplifier 180 should be equal, the output signal from the full-wave rectifier cannot know which signal was the larger. To eliminate this possibility for ambiguity the gain element 186 is connected in the loop following the variable gain element 184 to make sure that the signal in this loop is always dominant over the difference signal S. Because gain element 186 is inside the control loop for variable gain element 184 it will automatically wash out because of the feedback nature of the system, and will not affect the amplitude of the final noise-reduced signal S appearing at the output of variable gain element 184. Alternatively, a suitable gain element can be inserted in the S signal path to the difference amplifier to insure that this signal is always dominant, and inserting in the output line to the dematrixer an attenuator to offset the gain of the element in the S signal path.

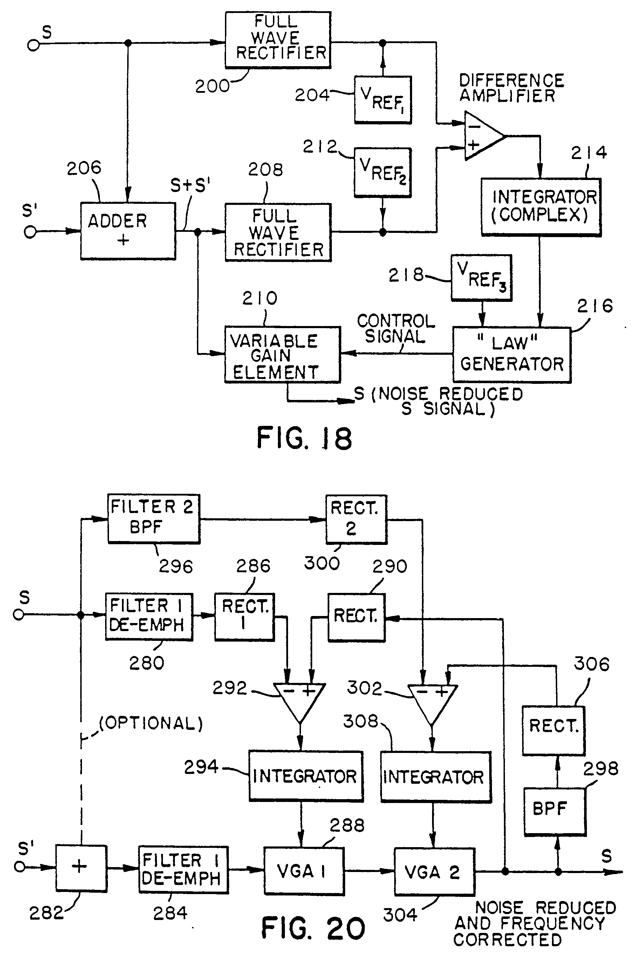

FIG. 18 is a block diagram of yet another implementation of an adaptive expander embodying the invention, this one being of the feed-forward type as opposed to the three feedback types just described. Although the feed-forward type is subject to the restrictions, not applicable to the feedback type, that the variable gain element must have a calibrated and prescribed transfer characteristic, and the control signal must be developed with appropriate gain and offsets to match that law, it can operate satisfactorily if such restrictions are taken into account. The feed-forward embodiment has many elements in common with the previously described adaptive expanders but are arranged differently as will now be described.

12

## EP 0 207 964 B1

Specifically, the uncompressed difference signal S is full-wave rectified by a rectifier 200, the output of which is applied as one input to a difference amplifier 202, the level of the rectified signal being settable by a voltage level setting device 204 designated $V_{ref.1}$. The uncompressed difference signal S is also added to the compressed difference signal S' in an adder 206 and the resulting sum signal applied to a second full-wave rectifier 208 and also to the input of a variable gain element 210.

The direct current signal from rectifier 208, after being subjected to level setting by a voltage level setting device 212 designated $V_{ref.2}$ and which may be embodied in the rectifier circuitry, is applied to the other input of difference amplifier 202. Any difference signal appearing at the output of amplifier 202 is applied to an integrator 214 of the complex type described earlier, the output of which is applied as one input to a "law" generator 216, to which is also applied a reference voltage $V_{ref.3}$ derived from a suitable voltage source 218. For a given change in level of the signal from integrator 214, the "law" generator 216 produces the correct output voltage or current for application to the control element of variable gain element 210 to insure that gain element 210 gives the correct amount of gain or attenuation as may be necessary at any instant of time. For example, since the variable gain element typically is logarithmic, the law generator 216 would contain a logarithmic circuit element to match the changes in the signal from integrator 214 to decibels of attenuation in the variable gain element 210. Thus, the output of variable gain element 210 is a noise-reduced difference signal S for application to the dematrixer.

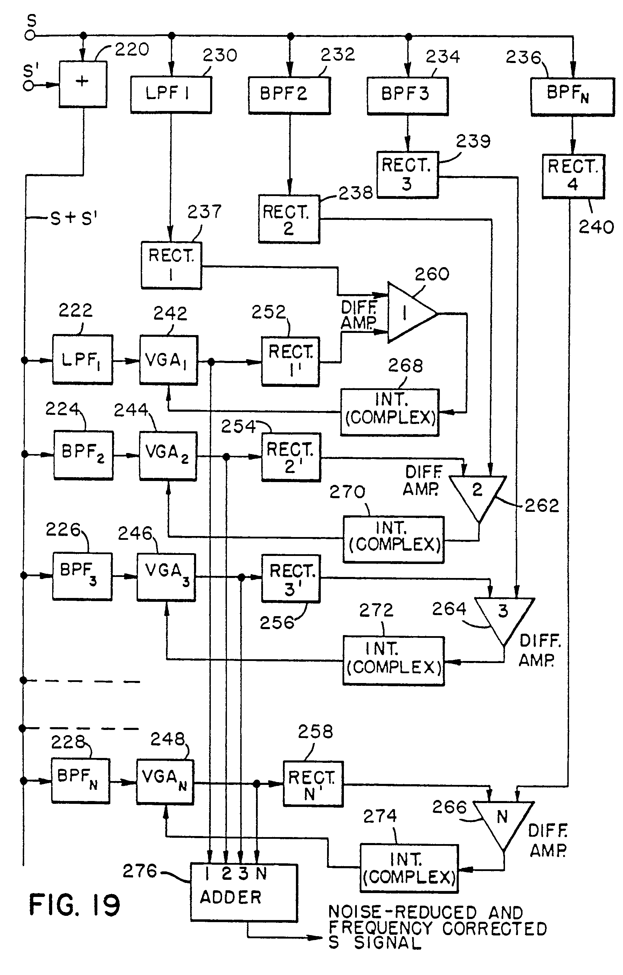

The availability at the receiver of the uncompressed difference signal also enables the design of a frequency correcting adaptive expander, one form of which is shown in the block diagram of FIG. 19. The principle of the illustrated frequency correcting expander is to utilize the uncompressed difference signal to adaptively expand a compressed signal containing unknown frequency responsive elements. For example, the Dolby A companding system has four companded channels, each with a distinct and separate frequency band which is compressed independently according to its own signal levels. The function of the system of FIG. 19 is to separate such a multi-channel signal into corresponding separate channels and using the uncompressed difference signal, which contains all of the signal information of the compressed difference signal, to separately adaptively expand the multiple channel signals, and thereafter combining the resulting noise-reduced channel signals to obtain a noise-reduced and frequency corrected difference signal for application to a dematrixer. To this end, the uncompressed difference signal S and the compressed difference signal S' are summed in an adder 220 and the resulting signal applied to an array of filters including a low pass filter 222 designated $LPF_1$ and a multiplicity of band pass filters 224, 226 and 228 respectively designated $BPF_2$, $BPF_3$ and $BPF_N$, designed to pass successively higher frequency bands in the audio frequency spectrum. The uncompressed difference signal S is applied to an equivalent set of filters 230, 232, 234 and 236 respectively designated $LPF_1$, $BPF_2$, $BPF_3$ and $BPF_N$ and having the same pass bands as the correspondingly designated filters in the other set. Each of the filters receiving the sum signal from adder 220 is connected to its own variable gain element 242, 244, 246 and 248, respectively, the outputs of which are applied to respective full-wave rectifiers 252, 254, 256 and 258. The direct current signals from these rectifiers are applied to one input of a respective difference amplifier 260, 262, 264 and 266. Similarly, the frequency bands of the uncompressed difference signal S passed by filters 230, 232, 234 and 236 are full-wave rectified by respective rectifiers 237, 238, 239 and 240 and the respective direct current output signals are applied to the other input terminal of difference amplifiers 260, 262, 264 and 266, respectively. The difference signals delivered by the difference amplifiers are applied to respective complex integrators 268, 270, 272 and 274 and the output signals therefrom after suitable amplification (not shown) are applied as control signals for variable gain elements 242, 244, 246 and 248, respectively. It will have been observed that the system of FIG. 19 is a group of four adaptive expanders each constructed according to the block diagram of FIG. 16, except that each is surrounded with a low pass filter or a band pass filter. The outputs of the multiple variable gain elements are combined in an adder 276 which combines all of the separately adaptively expanded signals together to produce at the output the total noise-reduced and frequency corrected difference signal S for application to the dematrixer. Thus, the system of FIG. 19 consists of a multiplicity of adaptive expanders, each of which operates on its own part of the frequency spectrum as defined by the associated filters. In practice, the filters need not have steep rolloff characteristics and may be, for example, of the order of 6dB or 12dB per octave. It will be understood that FIG. 19 illustrates an ultimate general case of a frequency correcting adaptive expander and that it may be modified to have more or less expanders to meet a specific application.

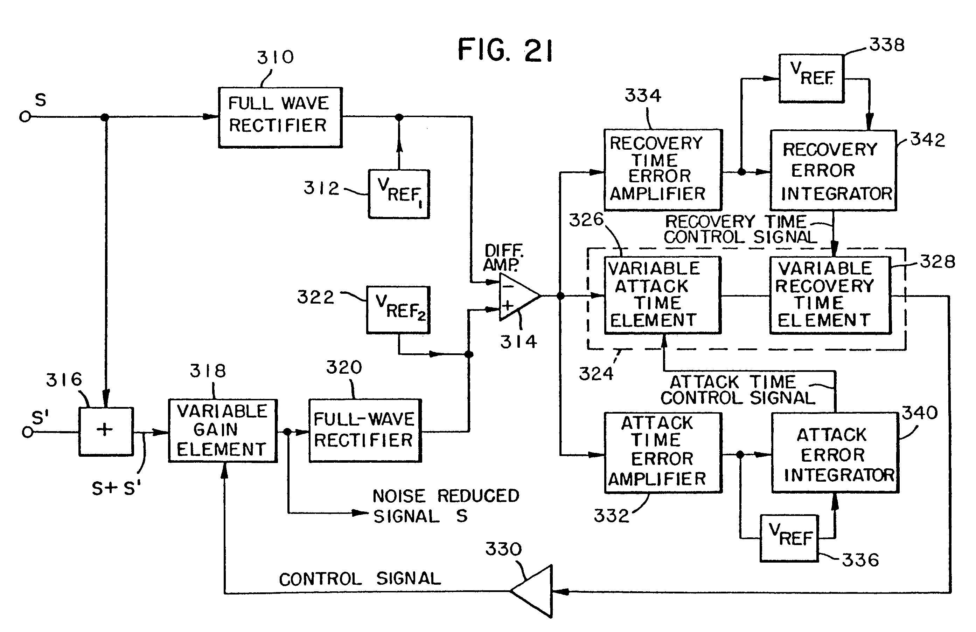

FIG. 20 is a block diagram of a frequency-correcting adaptive expanding system for providing essentially the same function as that achieved with the system of FIG. 19, except in this case the filtering process is arranged in series rather than in parallel. Also, rather than showing a general case, FIG. 20 shows how the system can be applied to the agreed EIA/dbx Inc. stereo television system in which the audio difference signal is compressed by a compressor which has two variable gain elements arranged in series and includes de-emphasis and bandpass networks for effectively dividing the audio frequency spectrum into two bands. Thus, for enabling the adaptive expansion of a dbx/compressed signal, the system of FIG. 20 has two variable gain elements connected in series and includes two sets of filters for dividing the audio frequency spectrum into substantially the same bands as are used in the dbx compressor. More specifically, the uncompressed difference signal S, which again is used as a reference signal, is applied to a first filter 280, and may optionally be added to the compressed difference signal S' in an adder 282; the resulting signal is applied to a second filter 284 having the same pass characteristics as filter 280. In

13

practice, both of filters 280 and 284 may be de-emphasis filters having characteristics comparable to those which establish the upper band in the dbx Inc. compressor. As in the arrangement of FIG. 16, the selected band of the signal S is full wave rectified by a rectifier 216 and the selected band of the signal from adder 212 is applied to a variable gain element 288. This variable gain element operates on a selected high frequency band and functions as a variable de-emphasis element. The overall output of the expander is rectified by a rectifier 290, and the direct current output signals from rectifiers 286 and 290 are applied to respective inputs of a difference amplifier 292, the output of which is applied to a complex integrator 294 which develops a control signal for variable element 288. The remaining portion of the spectrum of difference signal S is applied to a second filter 296 and the frequency-corrected and noise-reduced signal delivered by variable element 288 is applied to a wide band variable gain element 304. The output of element 304, which is the output of the expander, is also applied to a bandpass filter 298 which, again, has the same pass characteristics as filter 296. As before, the selected band of signal S is full-wave rectified by a rectifier 300 and the resulting direct current signal is applied as one input to a difference amplifier 302, and the signal passed by filter 298 is applied to a full-wave rectifier 306, the output of which is applied to the other input of the difference amplifier 302. The output signal from the difference amplifier is applied to a complex integrator 308, the output of which after suitable amplification (not shown) constitutes the control signal for variable gain element 304. Thus, it is seen that the system of FIG. 20 is similar in function to the system of FIG. 19 except that the individual adaptive expanders are connected in series with filter or variable de-emphasis elements connected between them, and the full noise-reduced and frequency corrected signal S appears at the output of the last variable gain element (i.e., element 304) in the chain. It is to be understood that in the interest of clarity only two series-connected expanders have been shown, and that additional stages can be provided should the application require.

Since the uncompressed difference signal S contains all of the dynamics of the original signal which may, for example, be music, it can be used in an adaptive expander to determine what attack and recovery times were used in the transmitter's compressor, whatever its type. By way of background, in the design of companding systems there is always a compromise between the attack and recovery times. Considering first the attack time, it can not be so short that the rate of change of gain of the signal would be so large during signal correction as to produce an audible click due to the rapid amplitude modulation of the signal. Another disadvantage of an attack time that is too short is that sharp peaks in the signal will tend to over modulate the transmitter. Accordingly, attack times of 10 to 20 milliseconds are typically used in companding systems in order to maintain a higher average modulation level by, in effect, missing the peaks on the program signal while at the same time not continuously overloading the transmitter, as would be the case if the attack time is too long.

Now briefly considering the attack and recovery times of companding systems, in order to keep the modulation of the transmitter at a maximum, the attack time of the compressor should be as short as possible so that upon occurrence of a sudden high level transient the compressor is gain adjusted downward in order not to over modulate. If the recovery time were long and the transient followed immediately by a passage of quiet music, the expander would take too long to reduce gain, and the transmission channel noise would be heard fading away. On the other hand, a recovery time that is too short is undesirable because there will be gain modulation during each cycle, or cycle-following of low frequencies and consequent increase in distortion. These conflicting requirements of attack and recovery times are usually met by making compromised choices or by using complex integrators, such as the one used in the "CX" companding system described in commonly assigned Pat. No. 4,376,916, which has multiple and complex attack and recovery times for different signal conditions.

The above-outlined characteristics of companding systems are equally present when considering an adaptive expander because it is not possible to make the attack time of the adaptive expander infinitely short, nor its recovery time very long. If this could be done the output dynamics of the signal would be good because if, for instance, the reference signal S had a transient that went up and then recovered in a certain way, the compressor at the transmitter would alter those dynamic ratios and an adaptive expander would, if not limited by recovery or attack time integrators, seek to establish the correct signal level and put the output right. However, in practice, for a low frequency transmitted signal such an adaptive expander itself would cycle-follow and cause distortion. Consequently, even an adaptive expander must have attack and recovery time elements, preferably of the complex type as shown and described in the embodiments discussed thus far. However, it will be seen that it is possible to adapt the integrator of the adaptive expander to the attack and recovery time constants of the compressor at the transmitter.

Referring to FIG. 21, which illustrates in block diagram form a feedback type of adaptive expander corresponding generally to the arrangement shown in FIG. 16, the uncompressed difference signal S is full-wave rectified by a full-wave rectifier 310 and the direct current output signal, after being subjected to level setting by a voltage reference element 312 (which may be incorporated in the rectifier circuitry), is applied as one input to a difference amplifier 314. The uncompressed and compressed difference signals are summed by an adder 316 and the resulting signal is applied to a variable gain element 318. As before, the output signal from the variable gain element is full-wave rectified by a rectifier 320 and its dc output signal adjusted in level by a voltage reference device 322 and thereafter applied as the second input to difference amplifier 314. The output signal from the difference amplifier is applied to a complex integrator 324 which includes a variable attack time element 326 and a variable recovery time element 328. The output of the integrator, after suitable amplification by an amplifier 330, becomes the control signal for variable gain element 318. Again, as before, the output of the variable gain element is a noise-reduced signal S and, as will be seen, is also adapted to the dynamics of the original signal.

When the signal at the output of difference amplifier 314 becomes large on a transient basis, it is known that there is a large error in either the attack or the recovery time constants of integrator 324, and for the reasons discussed above it is desirable that the integrator be adjusted to always go for the longest possible attack time and the longest possible recovery time. This is accomplished by also applying the output signal from difference amplifier 314 to two sensing amplifiers: an attack time error amplifier 332 and a recovery time error amplifier 334. Each of the sensing amplifiers 332 and 334 has an associated voltage reference element 336 and 338, respectively, which establishes a voltage level against which the output signal from the amplifier is compared to determine the magnitude of the error signal from difference amplifier 314. It is possible to distinguish whether the error is an attack time error or a recovery time error because the polarity of the error signal for attack time is the opposite of the polarity of the error signal for recovery time. Thus, the error signal can, in either case, be integrated to develop a control signal for altering the attack and recovery time constants of integrator 324. To this end, the error signal from sensing amplifier 332 is applied to an attack error integrator 340, which develops a control signal which is applied to the control element of variable attack time element 326 of integrator 324, and the error signal output of sensing amplifier 334 is applied to recovery error integrator 342, which develops a recovery time control signal for adjusting the recovery time of variable recovery time element 328. Variable attack time element 326 may take the form of an RC circuit including a series resistor and a capacitor connected to a ground reference in which the resistive element is controllably variable; for example, the resistor may be either a variable current source or a field effect transistor (FET) arranged to be controlled by the control signal from the attack error integrator. Thus, for example, if the attack time of integrator 324 had initially been set to have a long time constant and a signal is received having a short attack time, a large attack time error would be sensed, and if it exceeded the level established by $V_{ref.}$ 336, the control signal would change the resistance of the variable resistance element in a direction to shorten the attack time constant. Meanwhile, the attack error integrator 340 would very slowly relax to again exhibit a long attack time constant.

The time constant of the variable recovery time element 328 may be controlled by the parallel combination of a resistor and a capacitor for discharging the main integrating capacitor; again, the resistor may take the form of either a variable current source or a variable resistor, or similar circuit element, adapted to be controlled by the control signal developed by the recovery error integrator 342. As in the case of the variable attack time element, the controllable resistor in element 328 would normally be set to exhibit its longest possible recovery time constant (within reason) and to be shortened in response to the recovery time control signal. It will now be apparent that the system of FIG. 21, which is basically the same as that of FIG. 16 except that the complex integrator is replaced by a controllable complex integrator, will automatically adapt to the attack and recovery dynamics of the compressed signal, all made possible by using the uncompressed difference signal S as a reference.

It will, of course, be understood that the three general types of adaptive expander described above are not mutually exclusive and, in fact, they can be combined in a variety of permutations and combinations. For example, one or the other of the frequency-correcting arrangements of FIGS. 19 and 20 could be combined with the just described adaptive attack and recovery time expander feature. Also, it will be recognized by ones skilled in the companding art that the described adaptive techniques for expanding compressed signals are equally applicable to compressors should a situation arise requiring them.

It should now be evident that the transmission of the uncompressed difference signal S along with a compressed version S' of the difference signal, enables utilization of the uncompressed difference signal at the receiver as a reference signal to make an expander adaptive to any companding law and which enables decoding of dynamic parameters of the received signal, such as frequency response, and attack and recovery time constants, so that all of the parameters of the original signal can be restored automatically, regardless of the transmission system.

Although several specific embodiments of the invention have been illustrated and described, they are exemplary only, and such variations and modifications as will now be suggested by those skilled in the art will be understood as forming a part of the present invention insofar as they fall within the spirit and scope of the appended claims.

For example, the invention may be used in other than the described frequency modulation system, including amplitude modulation, phase modulation, delta modulation, pulse and pulse code modulation. The carrier may be any of a variety of forms, including visible or infrared light, and multiplexed satellite distribution systems. The various functions shown in the block diagrams may be implemented in many ways so as to achieve ideal and/or robust characteristics; for example, the full-wave rectifier and integrator typically form an envelope detector of which various implementations, including r.m.s. detectors, are available. Also, although the described use of a quadrature channel permits the transmission of the compressed difference signal without requiring an increase in bandwidth, if additional bandwidth is available, it is then possible to use an additional carrier, sufficiently removed in frequency from the S subcarrier, to contain the compressed difference signal.

# EP 0 207 964 B1

**Claims**

1. A receiver for use in a biphonic FM stereophonic broadcasting system which is adapted to receive a high frequency carrier modulated by a stereo sum signal M and first and second sub-carriers respectively modulated by a stereo difference signal S and a compressed version S' of said stereo difference signal, said receiver comprising:

demultiplexing means for deriving said stereo sum signal M, said stereo difference signal S and said compressed stereo difference signal S',

means responsive to both said stereo difference signal S and said compressed stereo difference signal S' for expanding said compressed stereo difference signal S' to obtain a noise-reduced stereo difference signal having an amplitude level substantially equal to that of the stereo difference signal S, and

de-matrix means for combining said noise-reduced stereo difference signal with said stereo sum signal M to obtain left and right channel stereophonic signals.

2. A receiver as defined in claim 1, wherein said means for expanding comprises:

first and second demodulators for separately demodulating said first and second sub-carriers for obtaining said stereo difference signal S and said compressed, stereo difference signal S',

means connected to receive and for summing said stereo difference signal S and said compressed stereo difference signal S' to obtain the sum signal (S + S'), and

expander means for expanding said sum signal (S + S') to obtain said noise-reduced stereo difference signal.

3. A receiver as defined in claim 2 for use in a stereophonic FM broadcasting system in which said first and second sub-carriers are of the same frequency and displaced in phase by 90° and said high frequency carrier is further modulated by a pilot signal having a frequency which is one-half the frequency of the sub-carriers, wherein said demultiplexing means includes means for deriving said pilot signal, and wherein said first and second demodulators are connected to receive said pilot signal.

4. A receiver as defined in claim 1 for use in a stereophonic FM broadcasting in which said first and second sub-carriers are of the same frequency and displaced in phase by 90° and said high frequency carrier is further modulated by a pilot signal having a frequency which is one-half the frequency of the sub-carriers, wherein said demultiplexing means includes means for deriving said pilot signal and wherein said means for expanding comprises:

quadrature demodulator means connected to receive and responsive to said pilot signal for quadrature demodulating said stereo difference signal S and said compressed stereo difference signal S' and producing an output signal representing the square root of the sum of the squares of the signals S and S' and

expander means for expanding said output signal to obtain said noise-reduced difference signal.

5. A receiver as defined in claim 1, wherein said means for expanding is adaptive and comprises:

an electronically controllable variable gain device having input, output and control terminals,

means for applying said compressed stereo difference signal S' to the input of said variable gain device, and

control signal generating means for generating a control signal responsively to both said compressed stereo difference signal S' and said stereo difference signal S and applying the control signal to the control terminal of said variable gain device for causing the gain between the input and the output of the variable gain device to have a value dependent on the value of said control signal.

6. A receiver as defined in claim 5, wherein the control signal generating means of said means for expanding includes

means including comparator means for dynamically comparing a signal proportional to the signal produced at the output terminal of said variable gain device against a signal proportional to said stereo difference signal S for producing an error signal proportional to differences between said signals S and S', and

means for processing said error signal to produce said control signal.

7. A receiver as defined in claim 6, wherein the means of said expanding means for applying said stereo difference signal S' to said variable gain device includes means for summing said stereo difference signal S and said compressed stereo difference signal S' and applying the resulting sum signal to the input terminal of said variable gain device, and

wherein said control signal generating means includes rectifier means for causing said control signal to be a direct current signal which substantially follows dynamic variations of the error signal produced by said comparator means.

8. A receiver as defined in claim 7, wherein the rectifier means of said control signal generating means comprises

first rectifier means responsive to the stereo difference signal S for producing a first rectified signal having a level proportional to the amplitude of and which substantially follows dynamic variations of the stereo difference signal S, and means for applying said first rectified signal to said comparator means, and

second rectifier means responsive to the signal produced at the output terminal of said variable gain device for producing a second rectified signal having a level proportional to the amplitude of and which substantially follows dynamic variations of the output signal from said variable gain device, and

16

means for applying said second rectified signal to said comparator means.

9. A receiver as defined in claim 8, wherein the control signal generating means of said expanding means includes complex integrator means consisting of a network of signal paths having differing time constants for modifying said control signal to minimize program modulated noise in spite of rapid changes in level of said signals S and S'.

10. A receiver as defined in claim 9, wherein said complex integrator means comprises a single integrator circuit having an input connected to receive the error signal from said comparator means and having an output coupled to the control terminal of said variable gain device.

11. A receiver as defined in claim 9, wherein said complex integrator means comprises:

a first integrator circuit having an input connected to receive said first rectified signal and having an output coupled to said comparator means, and

a second integrator circuit having an input connected to receive said second rectified signal and having an output coupled to said comparator means.

12. A receiver as defined in claim 7, wherein said stereo difference signal S is directly applied to said comparator means,

wherein the rectifier means of said control signal generating means comprises a single rectifier responsive to said error signal for producing a rectified error signal having a level proportional to the amplitude of and which substantially follows dynamic variations of said error signal, and

wherein said control signal generating means further includes complex integrating means consisting of a network of signal paths having differing time constants for modifying said rectified error signal to produce said control signal.

13. A receiver as defined in claim 5, wherein the means in said expanding means for applying said compressed stereo difference signal S' to said variable gain device comprises means for summing said stereo difference signal S and said compressed stereo difference signal S' and applying the resulting sum signal to the input terminal of said variable gain device, and

wherein said control signal generating means includes comparator means for dynamically comparing a signal proportional to said sum signal against a signal proportional to said stereo difference signal S for producing an error signal proportional to differences between said signals S and S', and

means for processing said error signal to produce said control signal.

14. A receiver as defined in claim 13, wherein the control signal generating means of said expanding means further includes

first rectifier means responsive to the stereo difference signal S for producing and applying to said comparator means a first rectified signal having a level proportional to the amplitude of and which substantially follows dynamic variations of the stereo difference signal S,

second rectifier means responsive to said sum signal for producing and applying to said comparator means a second rectified signal having a level proportional to the amplitude of and which substantially follows dynamic variations of said sum signal, and

wherein said means for processing said error signal includes integrator means consisting of a network of signal paths having differing time constants.

15. A receiver as defined in claim 14, wherein said error signal processing means further includes circuit means for modifying the output signal from said integrator means to produce a control signal which is adapted to the gain characteristics of said variable gain element.

16. A receiver as defined in claim 9, wherein the means for applying the stereo difference signal S to said first rectifier means includes first filter means for applying to said first rectifier means a selected frequency band of the difference signal S, and

wherein the means for applying the output signal from said variable gain device to said second rectifier means includes second filter means having substantially the same pass characteristics as said first filter means for coupling said selected frequency band of said output signal to said second rectifier means.

17. A receiver as defined in any of the preceding claims, wherein said receiver further comprises:

switch means connected to said de-matrix means and operative alternatively to couple the stereo difference signal S, instead of the noise-reduced difference signal, to said de-matrix means for enabling said receiver for reproducing conventional two-channel stereophonic broadcasts.

18. An improved biphonic FM radio transmission system for transmitting stereophonically related left and right channel signals, said system comprising:

at the transmitter

matrix means for combining the left and right channel stereophonic signals to obtain a sum signal M corresponding to the sum of the left and right channel signals and a stereo difference signal S corresponding to the difference between the left and right channel signals;

compressor means connected to said matrix means for compressing the dynamic range of said difference signal S to produce a compressed stereo difference signal S' which is compressed according to a desired compression law;

generating means for generating two subcarriers of the same frequency and spaced 90° apart in phase and a pilot signal having a frequency which is one half the frequency of the sub-carriers;

modulator means connected to said generating means, said compressor means and said matrix means for amplitude-modulating each sub-carrier with a respective one of said stereo difference and compressed stereo difference signals S and S' to develop two double-sideband suppressed-carrier signals, the frequency of said sub-carriers being sufficiently high as to insure a frequency gap between the lower sidebands of the modulated sub-carrier signals and the frequency bandwidth of said sum signal M, with the frequency of the pilot signal being located within said gap; and

frequency modulating means connected for frequency modulating the modulated sub-carrier signals, the pilot signal, and the sum signal M onto a high-frequency carrier for the purpose of transmitting the same to one or more remote receivers; and

at the receiver

deriving means for receiving said frequency modulated high-frequency carrier and for deriving said sum signal M and said amplitude-modulated sub-carriers respectively modulated by said stereo difference signal S and said compressed stereo difference signal S';

means including demodulator means for combining and demodulating the amplitude-modulated sub-carrier signal for producing a combined signal and for expanding the combined signal to obtain a noise-reduced stereo difference signal having an amplitude level substantially equal to that of the stereo difference signal S; and

de-matrix means connected to receive and for combining said noise-reduced difference signal with said sum signal M to obtain said left and right channel stereophonic signals.

19. A biphonic FM radio transmission system as defined in claim 18, wherein said demodulator means comprises first and second demodulators each for demodulating a different one of said amplitude-modulated sub-carriers to derive said stereo difference signal S and said compressed stereo difference signal S',

wherein said combining means includes means for summing said stereo difference signal S and said compressed stereo difference signal S' to produce a sum signal (S + S'), and

wherein said means for expanding comprises an expander for expanding said sum signal (S + S') to obtain said noise-reduced stereo difference signal.

20. A biphonic FM radio transmission system as defined in claim 18, wherein the compressor in the transmitter has a compression characteristic which has unity slope for input signal levels up to a predetermined input signal level and which has infinity slope for input signal levels above said predetermined level.

21. A biphonic FM radio transmission system as defined in claim 18, wherein the compressor in the transmitter has a compression characteristic which has unity slope for input signal levels below a first predetermined level, and a slightly negative slope for input signal levels greater than said first predetermined level and less than a second higher predetermined level.

## Revendications

1. Un récepteur prévu pour l'utilisation dans un système de radiodiffusion stéréophonique MF biphonique, qui est conçu pour recevoir une porteuse de haute fréquence modulée par un signal de somme stéréophonique M et des première et seconde sous-porteuses qui sont respectivement modulées par un signal de différence stéréophonique S et une version comprimée S' de ce signal de différence stéréophonique, ce récepteur comprenant:

des moyens de démultiplexage destinés à élaborer le signal de somme stéréophonique M, le signal de différence stéréophonique S et le signal de différence stéréophonique comprimé S',

des moyens qui fonctionnent sous la dépendance du signal de différence stéréophonique S ainsi que du signal de différence stéréophonique comprimé S' pour effectuer une extension du signal de différence stéréophonique comprimé S', afin d'obtenir un signal de différence stéréophonique à bruit réduit ayant un niveau d'amplitude pratiquement égal à celui du signal de différence stéréophonique S, et

des moyens de séparation matricielle destinés à combiner le signal de différence stéréophonique à bruit réduit avec le signal de somme stéréophonique M, pour obtenir des signaux stéréophoniques de la voie gauche et de la vie droite.

2. Un récepteur selon la revendication 1, dans lequel les moyens d'extension comprennent:

des premier et second démodulateurs pour démoduler séparément les première et seconde sous-porteuses, afin d'obtenir le signal de différence stéréophonique S et le signal de différence stéréophonique comprimé S',

des moyens qui sont connectés pour recevoir le signal de différence stéréophonique S et le signal de différence stéréophonique comprimé S' et pour faire la somme de ces signaux afin d'obtenir le signal de somme (S + S'), et

des moyens extenseurs destinés à étendre le signal de somme (S + S') pour obtenir le signal de différence stéréophonique à bruit réduit.

3. Un récepteur selon la revendication 2, prévu pour l'utilisation dans un système de radiodiffusion MF stéréophonique dans lequel les première et seconde sous-porteuses ont la même fréquence et sont mutuellement déphasées de 90°, et la porteuse de haute fréquence est en outre modulée par un signal pilote ayant une fréquence qui est égale à la moitié de la fréquence des sous-porteuses, dans lequel les moyens de démultiplexage comprennent des moyens pour élaborer le signal pilote, et dans lequel les premier et second démodulateurs sont connectés pour recevoir ce signal piloote.

EP 0 207 964 B1

4. Un récepteur selon la revendication 1, prévu pour l'utilisation dans un système de radiodiffusion MF stéréophonique dans lequel les première et seconde sous-porteuses ont la même fréquence et sont déphasées de 90°, et la porteuse de haute fréquence est en outre modulée par un signal pilote ayant une fréquence qui est égale à la moitié de la fréquence des sous-porteuses, dans lequel les moyens de démultiplexage comprennent des moyens pour élaborer le signal pilote, et dans lequel les moyens d'extension comprennent:

des moyens démodulateurs en quadrature connectés pour recevoir le signal pilote et réagissant à ce signal en effectuant une démodulation en quadrature du signal de différence stéréophonique S et du signal de différence stéréophonique comprimé S', et en produisant un signal de sortie qui représente la racine carrée de la somme des carrés des signaux S et S', et

des moyens extenseurs destinés à étendre le signal de sortie pour obtenir le signal de différence à bruit réduit.

5. Un récepteur selon la revendication 1, dans lequel les moyens d'extension sont adaptatifs et comprennent:

un dispositif à gain variable pouvant être commandé de façon électronique, qui comporte des bornes d'entrée, de sortie et de commande,

des moyens pour appliquer le signal de différence stéréophonique comprimé S' à l'entrée du dispositif à gain variable, et

des moyens de génération de signal de commande qui sont destinés à générer un signal de commande sous la dépendance du signal de différence stéréophonique comprimé S' ainsi que du signal de différence stéréophonique S, et à appliquer le signal de commande à la borne de commande du dispositif à gain variable, pour faire en sorte que le gain entre l'entrée et la sortie du dispositif à gain variable ait une valeur qui dépend de la valeur du signal de commande.

6. Un récepteur selon la revendication 5, dans lequel les moyens de génération de signal de commande des moyens d'extension comprennent

des moyens comprenant des moyens comparateurs destinés à comparer de façon dynamique un signal proportionnel au signal qui est produit sur la borne de sortie du dispositif à gain variable, avec un signal proportionnel au signal de différence stéréophonique S, pour produire un signal d'erreur proportionnel à des différences entre les signaux S et S', et

des moyens pour traiter le signal d'erreur afin de produire le signal de commande.

7. Un récepteur selon la revendication 6, dans lequel les moyens appartenant aux moyens d'extension qui sont destinés à appliquer le signal de différence stéréophonique S' au dispositif à gain variable comprennent des moyens pour faire la somme du signal de différence stéréophonique S et du signal de différence stéréophonique comprimé S', et pour appliquer le signal de somme résultant à la borne d'entrée du dispositif à gain variable, et

dans lequel les moyens de génération de signal de commande comprennent des moyens redresseurs destinés à faire en sorte que le signal de commande sooit un signal à courant continu qui suit pratiquement des variations dynamiques du signal d'erreur que produisent les moyens comparateurs.

8. Un récepteur selon la revendication 7, dans lequel les moyens redresseurs des moyens de génération de signal de commande comprennent

des premiers moyens redresseurs qui réagissent au signal de différence stéréophonique S en produisant un premier signal redressé ayant un niveau proportionnel à l'amplitude du signal de différence stéréophonique S et qui suit pratiquement des variations dynamiques de ce dernier, et des moyens pour appliquer le premier signal redressé aux moyens comparateurs, et

des seconds moyens redresseurs réagissant au signal qui est produit sur la sortie du dispositif à gain variable en produisant un second signal redressé ayant un niveau proportionnel à l'amplitude du signal de sortie du dispositif à gain variable et qui suit pratiquement des variations dynamiques de ce signal de sortie, et

des moyens pour appliquer le second signal redressé aux moyens comparateurs.

9. un récepteur selon la revendication 8, dans lequel les moyens de génération de signal de commande des moyens d'extension comprennent des moyens intégrateurs complexes qui consistent en un réseau de chemins de signal ayant différentes constantes de temps, pour modifier le signal de commande de façon à minimiser le bruit modulé par l'information utile, malgré des changements rapides du niveau des signaux S et S'.

10. Un récepteur selon la revendication 9, dans lequel les moyens intégrateurs complexes comprennent un seul circuit intégrateur ayant une entrée connectée pour recevoir le signal d'erreur qui provient des moyens comparateurs, et ayant une sortie connectée à la borne de commande du dispositif à gain variable.

11. Un récepteur selon la revendication 9, dans lequel les moyens intégrateurs complexes comprennent:

un premier circuit intégrateur ayant une entrée connectée pour recevoir le premier signal redressé et ayant une sortie connectée aux moyens comparateurs, et

un second circuit intégrateur ayant une entrée connectée pour recevoir le second signal redressé et ayant une sortie connectée aux moyens comparateurs.

12. Un récepteur selon la revendication 7, dans lequel le signal de différence stéréophonique S est

19

directement appliqué aux moyens comparateurs,

dans lequel les moyens redresseurs des moyens de génération de signal de commande comprennent un seul redresseur qui réagit au signal d'erreur en produisant un signal d'erreur redressé ayant un niveau proportionnel à l'amplitude du signal d'erreur et qui suit pratiquement des variations dynamiques du signal d'erreur et,

dans lequel les moyens de génération de signal de commande comprennent en outre des moyens d'intégration complexes qui consistent en un réseau de chemins de signal ayant différentes constantes de temps, pour modifier le signal d'erreur redressé de façon à produire le signal de commande.

13. Un récepteur selon la revendication 5, dans lequel les moyens qui font partie des moyens d'extension et qui sont destinés à appliquer le signal de différence stéréophonique comprimé S' au dispositif à gain variable, comprennent des moyens destinés à faire la somme du signal de différence stéréophonique S et du signal de différence stéréophonique comprimé S', et à appliquer le signal de somme résultant à la borne d'entrée du dispositif à gain variable, et

dans lequel les moyens de génération de signal de commande comprennent des moyens comparateurs destinés à comparer de façon dynamique un signal proportionnel au signal de somme, avec un signal proportionnel au signal de différence stéréophonique S, pour produire un signal d'erreur proportionnel à des différences entre les signaux S et S', et

de moyens pour traiter le signal d'erreur de façon à produire le signal de commande.

14. Un récepteur selon la revendication 13, dans lequel les moyens de génération de signal de commande des moyens d'extension comprennent en outre

des premiers moyens redresseurs qui réagissent au signal de différence stéréophonique S en produisant et en appliquant aux moyens comparateurs un premier signal redressé ayant un niveau proportionnel à l'amplitude du signal de différence stéréophonique S, et qui suit pratiquement des variations dynamiques de ce dernier,

des seconds moyens redresseurs qui réagissent au signal de somme en produisant et en appliquant aux moyens comparateurs un second signal redressé ayant un niveau proportionnel à l'amplitude du signal de somme et qui suit pratiquement des variations dynamiques de ce dernier, et

dans lequel les moyens destinés à traiter le signal d'erreur comprennent des moyens intégrateurs qui consistent en un réseau de chemins de signal ayant différentes constantes de temps.

15. Un récepteur selon la revendication 14, dans lequel les moyens de traitement de signal d'erreur comprennent en outre un circuit destiné à modifier le signal de sortie qui provient des moyens intégrateurs, pour produire un signal de commande qui est adapté aux caractéristiques de gain de l'élément à gain variable.

16. Un récepteur selon la revendication 9, dans lequel les moyens destinés à appliquer le signal de différence stéréophonique S aux premiers moyens redresseurs comprennent des premiers moyens de filtrage destinés à appliquer aux premiers moyens redresseurs une bande de fréquence sélectionnée du signal de différence S, et

dans lequel les moyens destinés à appliquer le signal de sortie du dispositif à gain variable aux seconds moyens redresseurs comprennent des seconds moyens de filtrage ayant pratiquement les mêmes caractéristiques de bande passante que les premiers moyens de filtrage, pour appliquer aux seconds moyens redresseurs la bande de fréquence sélectionnée du signal de sortie.

17. Un récepteur selon l'une quelconque des revendications précédentes, ce récepteur comprenant en outre:

des moyens de commutation connectés aux moyens de séparation matricielle et capables d'appliquer le signal de différence stéréophonique S aux moyens de séparation matricielle, à la place du signal de différence à bruit réduit, pour permettre au récepteur de reproduire des émission stéréophoniques à deux voies classiques.

18. Un système perfectionné de radiodiffusion MF biphonique, destiné à transmettre des signaux de voie gauche et de voie droite présentant une relation stéréophonique, ce système comprenant:

dans l'émetteur

des moyens de combinaison matricielle destinés à combiner les signaux stéréophoniques de la voie gauche et de la voie droite pour obtenir un signal de somme M correspondant à la somme des signaux de la voie gauche et de la voie droite, et un signal de différence stéréophonique S correspondant à la différence entre les signaux de la voie gauche et de la voie droite;

des moyens compresseurs connectés aux moyens de combinaison matricielle; pour comprimer la dynamique du signal de différence S, de façon à produire un signal de différence stéréophonique comprimé S' qui est comprimé conformément à une loi de compression désiree;

des moyens de génération destinés à générer deux sous-porteuses de même fréquence et déphasées de 90°, et un signal pilote ayant une fréquence qui est égale à la moitié de la fréquence des sous-porteuses;

des moyens modulateurs connectés aux moyens de génération, aux moyens compresseurs et aux moyens de combinaison matricielle, pour moduler en amplitude chaque sous-porteuse avec un signal respectif parmi le signal de différence stéréophonique S et le signal de différence stéréophonique comprimé S', afin d'obtenir deux signaux à double bande latérale et porteuse atténuée, la fréquence des sous-porteuses précitées étant suffisamment élevée pour établir un intervalle de fréquence entre les bandes latérales inférieures des signaux de sous-porteuse modulés et la largeur de bande de fréquence du signal de somme M, avec la fréquence du signal pilote située à l'intérieur de cet intervalle; et

des moyens de modulation de fréquence connectés pour moduler en fréquence les signaux de sousporteuse modulés, le signal pilote et le signal de somme M, sur une porteuse de haute fréquence, dans le but d'émettre ces signaux vers un ou plusieurs récepteurs éloignés; et

dans le récepteur

des moyens d'élaboration destinés à recevoir la porteuse de haute fréquence modulée en fréquence, et à élaborer le signal de somme M et les sous-porteuses modulées en amplitude, qui sont respectivement modulées par le signal de différence stéréophonique S et le signal de différence stéréophonique comprimé S';

des moyens comprenant des moyens démodulateurs, pour comprimer et démoduler le signal de sousporteuse modulé en amplitude, pour produire un signal, combiné et pour appliquer une opération d'extension au signal combiné afin d'obtenir un signal de différence stéréophonique à bruit réduit, ayant un niveau d'amplitude pratiquement égal à celui du signal de différence stéréophonique S; et

des moyens de séparation matricielle, connectés pour recevoir et pour combiner le signal de différence à bruit réduit avec le signal de somme M, afin d'obtenir les signaux stéréophoniques de la voie gauche et de la voie droite.

19. Un système de radiodiffusion MF biphonique selon la revendication 18, dans lequel les moyens démodulateurs comprennent des premier et second démodulateurs, ayant chacun pour fonction de démoduler l'une différente des sous-porteuses modulées en amplitude pour élaborer le signal de différence stéréophonique S et le signal de différence stéréophnique comprimé S',

dans lequel les moyens de combinaison comprennent des moyens destinés à faire la somme du signal de différence stéréophonique S et du signal de différence stéréophonique comprimé S', pour produire un signal de somme (S + S'), et

dans lequel les moyens d'extension comprennent un extenseur destiné à étendre le signal de somme (S + S'), pour obtenir le signal de différence stéréophonique à bruit réduit.

20. Un système de radiodiffusion MF biphonique selon la revendication 18, dans lequel le compresseur dans l'émetteur a une caractéristique de compression qui présente une pente égale à l'unité pour des niveaux de signal d'entrée s'élevant jusqu'à un niveau de signal d'entrée prédéterminé, et qui présente une pente infinie pour des niveaux de signal d'entrée supérieurs au niveau prédéterminé.

21. Un système de radiodiffusion MF biphonique selon la revendication 18, dans lequel le compresseur dans l'émetteur a une caractéristique de compression qui présente une pente égale à l'unité pour des niveaux de signal d'entrée inférieurs à un premier niveau prédéterminé, et une pente légèrement négative pour des niveaux de signal d'entrée supérieurs au premier niveau prédéterminé, et inférieurs à un second niveau prédéterminé plus élevé.

**Patentansprüche**

1. Empfänger zur Verwendung in einem biphonischen FM-Stereorundfunksystem, der zum Empfang eines Hochfrequenzträgers geeignet ist, welcher durch ein Stereosummensignal M und einen ersten bzw. einen zweiten Zwischenträger moduliert ist, welche letzteren durch ein Stereodifferenzsignal S bzw. eine komprimierte Version S' des Stereodifferenzsignals moduliert sind, wobei der Empfänger umfaßt:

Demultiplexmittel zum Ableiten des Stereosummensignals M, des Stereodifferenzsignals S und des komprimierten Stereodifferenzsignals S',

auf das Stereodifferenzsignal S und das komprimierte Stereodifferenzsignal S' ansprechende Mittel zum Expandieren des komprimierten Stereodifferenzsignals S', um ein rauschreduziertes Stereodifferenzsignal mit einem Amplitudenpegel im wesentlichen gleich dem des Stereodifferenzsignals S zu erhalten, und

Dematriziermittel zum Kombinieren des rauschreduzierten Stereodifferenzsignals mit dem Stereosummensignal M, um die stereophonen linken und rechten Kanalsignale zu erhalten.

2. Empfänger nach Anspruch 1, in welchem die Mittel zum Expandieren umfassen:

erste und zweite Demodulatoren zum getrennten Demodulieren des ersten und zweiten Zwischenträgers, um das Stereodifferenzsignal S und das komprimierte Stereodifferenzsignal S' zu erhalten,

Mittel zum Empfang und zum Summieren des Stereodifferenzsignals S und des komprimierten Stereodifferenzsignals S', um das Summensignal (S + S') zu erhalten, und

Expandiermittel zum Expandieren des Summensignals (S + S'), um das rauschreduzierte Stereodifferenzsignal zu erhalten.

3. Empfänger nach Anspruch 2 zur Verwendung in einem Stereo-FM-Rundfunksystem, in welchem die ersten und zweiten Zwischenträger von gleicher Frequenz und zueinander um 90° phasenversetzt sind und der Hochfrequenzträger weiters moduliert ist durch ein Pilotsignal mit einer Frequenz, die die Hälfte der Frequenz der Zwischenträger ist, wobei die Demultiplexmittel Mittel zum Ableiten des Pilotsignals enthalten, und wobei die ersten und zweiten Demodulatoren zum Empfang des Pilotsignals angeschlossen sind.

4. Empfänger nach Anspruch 1 zur Verwendung in einem Stereo-FM-Rundfunksystem, in welchem die ersten und zweiten Zwischenträger von gleicher Frequenz und zueinander um 90° phasenversetzt sind und der Hochfrequenzträger weiters durch ein Pilotsignal mit einer Frequenz moduliert ist, welche die Hälfte der Frequenz der Zwischenträger ist, wobei die Demultiplexmittel Mittel zum Ableiten des Pilotsignals enthalten und wobei die Mittel zum Expandieren umfassen:

Quadraturdemodulatormittel zum Empfang des und reagierend auf das Pilotsignal zum Quadraturdemodulieren des Stereodifferenzsignals S und des komprimierten Stereodifferenzsignals S' und zur Erzeugung eines Ausgangssignals, das die Quadratwurzel der Summe der Quadrate der Signale S und S' repräsentiert, und

Expandiermittel zum Expandieren des Ausgangssignals, um das rauschreduzierte Differenzsignal zu erhalten.

5. Empfänger nach Anspruch 1, in welchem die Mittel zum Expandieren adaptiv sind und umfassen:

eine elektronisch steuerbare variable Verstärkungseinrichtung mit Eingangs-, Ausgangs- und Steueranschlüssen,

Mittel zum Anlegel des komprimierten Stereodifferenzsignals S' an den Eingang der variablen Verstärkungseinrichtung, und

Steuersignalerzeugungsmittel zum Erzeugen eines Steuersignals in Abhängigkeit des komprimierten Stereodifferenzsignals S' und des Stereodifferenzsignals S und zum Anlegen des Steuersignals an den Steueranschluß der variablen Verstärkungseinrichtung, um die Verstärkung zwischen dem Eingang und dem Ausgang der variablen Verstärkungseinrichtung zu veranlassen, einen Wert abhängig von Wert des Steuersignals einzunehmen.

6. Empfänger nach Anspruch 5, worin die Steuersignalerzeugungsmittel der Mittel zum Expandieren beinhalten:

Mittel mit Komparatormitteln zum dynamischen Vergleich eines Signales, das dem am Ausgangsanschluß der variablen Verstärkungseinrichtung erzeugten Signal proportional ist, mit einem Signal, das dem Stereodifferenzsignal S proportional ist, um ein Fehlersignal zu erzeugen, das den Differenzen zwischen den Signalen S und S' proportional ist, und

Mittel zum Verarbeiten des Fehlersignals, um das Steuersignal zu erzeugen.

7. Empfänger nach Anspruch 6, in welchem die Mittel der Expandiermittel zum Anlegen des Stereodifferenzsignals S' an die variable Verstärkungseinrichtung Mittel zum Summieren des Stereodifferenzsignals S und des komprimierten Stereodifferenzsignals S' und zum Anlegen des resultierenden Summensignals an den Eingangsanschluß der variablen Verstärkungseinrichtung beinhalten, und

wobei die Steuersignalerzeugungsmittel Gleichrichtermittel beinhalten, um das Steuersignal zu veranlassen, ein Gleichstromsignal zu sein, das im wesentlichen den Dynamikänderungen des von den Komparatormitteln erzeugten Fehlersignals folgt.

8. Empfänger nach Anspruch 7, in welchem die Gleichrichtermittel der Steuersignalerzeugungsmittel umfassen:

erste Gleichrichtermittel, die auf das Stereodifferenzsignal S ansprechen, um ein erstes gleichgerichtetes Signal mit einem Pegel zu erzeugen, der im wesentlichen proportional der Amplitude des Stereodifferenzsignals S ist und der im wesentlichen den Dynamikänderungen des Stereodifferenzsignals S folgt, und Mittel zum Anlegen des ersten gleichgerichteten Signals an die Komparatormittel, und

zweite Gleichrichtermittel, die auf das Signal ansprechen, das am Ausgangsanschluß der variablen Verstärkungseinrichtung erzeugt wird, um ein zweites gleichgerichtetes Signal mit einem Pegel zu erzeugen, der proportional der Amplitude des Ausgangssignals der variablen Verstärkungseinrichtung ist und der im wesentlichen den Dynamikänderungen dieses Ausgangssignals folgt, und

Mittel zum Anlegen des zweiten gleichgerichteten Signals an die Komparatormittel.

9. Empfänger nach Anspruch 8, in welchem die Steuersignalerzeugungsmittel der Expandiermittel komplexe Integratormittel beinhalten, die aus einem Netzwerk aus Signalpfaden mit verschiedenen Zeitkonstanten bestehen, um das Steuersignal zu modifizieren und das programmodulierte Rauschen trotz schneller Wechsel im Pegel der Signale S und Ś zu minimieren.

10. Empfänger nach Anspruch 9, in welchem die komplexen Integratormittel ienen einzelnen Integratorschaltkreis mit einem Eingang zum Empfang des Fehlersignals aus den Komparatormitteln und mit einem Ausgang, der mit dem Steueranschluß der variablen Verstärkungseinrichtung verbunenn ist, umfassen.

11. Empfänger nach Anspruch 9, in welchem die komplexen Integratormittel umfassen:

einen ersten Integratorschaltkreis mit einem Eingang zum Empfang des ersten gleichgerichteten Signals und mit einem Ausgang, der mit den Komparatormitteln verbunden ist, und

einen zweiten Integratorschaltkreis mit einem Eingang zum Empfang des zweiten gleichgerichteten Signals und mit einem Ausgang, der mit den Komparatormitteln verbunden ist.

12. Empfänger nach Anspruch 7, in welchem das Stereodifferenzsignal S direkt an die Komparatormittel angelegt wird,

wobei die Gleichrichtermittel der Steuersignalerzeugungsmittel einen einzelnen Gleichrichter umfassen, der auf das Fehlersignal anspricht, um ein gleichgerichtetes Fehlersignal mit einem Pegel zu erzeugen, der proportional ist der Amplitude des Fehlersignals und der im wesentlichen den Dynamikänderungen des Fehlersignals folgt, und

wobei die Steuersignalerzeugungsmittel weiters komplexe Integriermittel aus einem Netzwerk aus Signalpfaden mit verschiedenen Zeitkonstanten beinhalten, um das gleichgerichtete Fehlersignal zu modifizieren, um das Steuersignal zu erzeugen.

22

13. Empfänger nach Anspruch 5, in welchem die Mittel in den Expandiermitteln zum Anlegen des komprimierten Stereodifferenzsignals S' an die variable Verstärkungseinrichtung Mittel zum Summieren des Stereodifferenzsignals S und des komprimierten Stereodifferenzsignals S' und zum Anlegen des resultierenden Summensignals an den Eingangsanschluß der variablen Verstärkungseinrichtung umfassen, und

wobei die Steuersignalerzeugungsmittel Komparatormittel zum dynamischen Vergleichen eines Signals, das dem Summensignal proportional ist, mit einem Signal, das dem Stereodifferenzsignal S proportional ist, beinhalten, um ein Fehlersignal zu erzeugen, das den Differenzen zwischen den Signalen S und S' proportional ist, und

Mittel zum Verarbeiten des Fehlersignals, um das Steuersignal zu erzeugen.

14. Empfänger nach Anspruch 13, in welchem die Steuersignalerzeugungsmittel der Expandiermittel weiter beinhalten:

erste Gleichrichtermittel, die auf das Stereodifferenzsignal S ansprechen, zum Erzeugen und Anlegen eines ersten gleichgerichteten Signals mit einem Pegel, der proportional ist der Amplitude des und der im wesentlichen den Dynamikänderungen des Stereodifferenzsignals S folgt, an die Komparatormittel,

zweite Gleichrichtermittel, die auf das Summensignal ansprechen, zum Erzeugen und Anlegen eines zweiten gleichgerichteten Signals mit einem Pegel, der proportional ist der Amplitude des und der im wesentlichen den Dynamikänderungen des Summensignals folgt, an die Kopmaratormittel, und

wobei die Mittel zum Verarbeiten des Fehlersignals Integratormittel aus einem Netzwerk aus Signalpfaden mit verschiedenen Zeitkonstanten beinhalten.

15. Empfänger nach Anspruch 14, in welchem die Fehlersignalverarbeitungsmittel weiters Schaltungsmittel zum Modifizieren des Ausgangssignals aus den Integratormitteln beinhalten, um ein Steuersignal zu erzeugen, das an die Verstärkungscharakteristik des variablen Verstärkungselementes angepaßt ist.

16. Empfänger nach Anspruch 9, in welchem die Mittel zum Anlegen des Stereodifferenzsignals S an die ersten Gleichrichtermittel erste Filtermittel zum Anlegen eines ausgewählten Frequenzbandes des Differenzsignals S an die ersten Gleichrichtermittel beinhalten, und

wobei die Mittel zum Anlegen des Ausgangssignals aus der variablen Verstärkungseinrichtung an die zweiten Gleichrichtermittel zweite Filtermittel mit einer im wesentlichen gleichen Durchlaßcharakteristik wie die ersten Filtermittel beinhalten, um das ausgewählte Frequenzband des Ausgangssignals mit den zweiten Gleichrichtermitteln zu verbinden.

17. Empfänger nach einem der vorhergehenden Ansprüche, wobei der Empfänger weiters umfaßt:

Schaltmittel, verbunden mit den Dematriziermitteln und alternativ wirkend, um das Stereodifferenzsignal S anstelle des rauschreduzierten Differenzsignals an die Dematriziermittel anzuschließen, um den Empfänger zur Reproduktion konventioneller Zweikanalstereorundfunksendungen zu befähigen.

18. Verbessertes biphonisches FM-Radioübertragungssystem zum Übertragen stereophonisch aufeinander bezogener linker und rechter Kanalsignale, wobei das System umfaßt:

im Sender

Matriziermittel zum Kombinieren der linken und rechten Stereokanalsignale, um ein Summensignal M, das der Summe der linken und rechten Kanalsignale entspricht, und ein Stereodifferenzsignal S, das der Differenz aus linkem und rechtem Kanalsignal entspricht, zu erhalten;

Kompressormittel, verbunden mit dem Matriziermitteln, zum Komprimieren des Dynamikbereiches des Differenzsignals S, um ein komprimiertes Stereodifferenzsignal S' zu erzeugen, das entsprechend dem gewünschten Komprimierungsgesetz komprimiert ist;

Generatormittel zum Erzeugen zweier Zwischenträger, die von gleicher Frequenz und zueinander um 90° phasenversetzt sind, und eines Pilotsignals mit einer Frequenz, die die Hälfte der Frequenz der Zwischenträger ist;

Modulatormittel, verbunden mit den Generatormitteln, wobei die Kompressormittel und die Matriziermittel zur Amplitudenmodulation jedes Zwischenträgers mit dem entsprechenden Stereodifferenz- bzw. komprimierten Stereodifferenzsignal S und S' vorgesehen sind, um zwei trägerunterdrückte Doppelseitenband-Signale zu erzeugen, wobei die Frequenz der Zwischenträger ausreichend hoch ist, um eine Frequenzlücke zwischen den unteren Seitenbändern der modulierten Zwischenträgersignale und der Frequenzbandbreite des Summensignals M sicherzustellen, wobei die Frequenz des Pilotsignals innerhalb dieser Lücke liegt; und

Frequenzmodulationsmittel zum Frequenzmodulieren der modulierten Zwischenträgersignale, des Pilotsignals und des Summensignals M auf einen Hochfrequenzträger zum Zwecke deren Übertragung an einen oder mehrere entfernte Empfänger; und

im Empfänger

Ableitmittel zum Empfang des frequenzmodulierten Hochfrequenzträgers und zum Ableiten des Summensignals M und der entsprechend dem Stereodifferenzsignal S bzw. dem komprimierten Stereodifferenzsignal S' amplitudenmodulierten Zwischenträger;

Mittel, beinhaltend Demodulatormittel zum Kombinieren und Demodulieren des amplitudenmodulierten Zwischenträgersignals und zum Erzeugen eines kombinierten Signals und zum Expandieren des kombinierten Signals, um ein rauschreduziertes Stereodifferenzsignal mit einem Amplitudenpegel, der im wesentlichen dem des Stereodifferenzsignals S gleich ist, zu erhalten; und

Dematriziermittel zum Empfang und zum Kombinieren des rauschreduzierten Differenzsignals mit dem

23

Summensignal M, um die linken und rechten Stereokanalsignale zu erhalten.

19. Biphonisches FM-Radio-Übertragungssystem nach Anspruch 18, in welchem die Demodulatormittel erste und zweite Demodulatoren jeweils zum Demodulieren eines anderen der amplitudenmodulierten Zwischenträger umfassen, um das Stereodifferenzsignal S und das komprimierte Stereodifferenzsignal S' abzuleiten,

wobei die Kombiniermittel Mittel zum Summieren des Stereodifferenzsignals S und des komprimierten Stereodifferenzsignals S' beinahlten, um ein Summensignal (S + S') zu erzeugen, und

wobei die Mittel zum Expandieren einen Expander zum Expandieren des Summensignals (S + S') umfassen, um das rauschreduzierte Stereodifferenzsignal zu erhalten.

20. Biphonisches FM-Radio-Übertragungssystem nach Anspruch 18, in welchem der Kompressor im Sender eine Komprimierungskennlinie besitzt, die für Eingangssignalpegel bis zu einem vorbestimmten Eingangssignalpegel eine Einheitssteigung und für Eingangssignalpegel über dem vorbestimmten Pegel eine unendlich-Steigung aufweist.

21. Biphonisches FM-RadioÜbertragungssystem nach Anspruch 18, in welchem der Kompressor im Sender eine Komprimierungskennlinie besitzt, die für Eingangssignalpegel unter einem ersten vorbestimmten Pegel eine Einheitssteigung und für Eingangssignalpegel größer als der erste vorbestimmte Pegel und kleiner als ein zweiter höherer vorbestimmter Pegel eine geringfügig negative Steigung aufweist.

FIG. 1.

FIG. 2.

COEFFICIENTS:

$$A = 0.45(M) + 0.45(S)\sin wt + 0.45(S')\cos wt + 0.1\sin \frac{wt}{2}$$

FIG. 3.

1

# FIG. 4.

S = (L-R) → **PRE-EMPH (OPTIONAL)** 25

40 → **VARIABLE GAIN ELEMENT** → $S' = f(L-R)$ TO MODULATOR, 18

CONTROL SIGNAL

16 ---

**FULL-WAVE RECTIFIER** 42 → $V_{REF.}$ 44 → **INTEGRATOR (COMPLEX)** 46 → 48

# FIG. 7.

**RECEIVER / FM DEMODULATOR** 70 → $0.45(M) + 0.45(S) \sin wt + 0.45(S') \cos wt + 0.1 \sin \frac{wt}{2}$

**BAND PASS FILTER** 76

**LOW PASS FILTER** 72

PILOT REF.

**"S" DE-MODULATOR** 78 ← sin.wt **CARRIER GEN.** 82 cos. wt → **("S'") DE-MODULATOR** 80

**ADDER** 84

S + S'

**EXPANDER** 86

M

S

**DE-EMPH. (OPTIONAL)** 87

88

S

74 **DEMATRIXER**

**75 μ sec. DE-EMPH.** → 2L

**75 μ sec. DE-EMPH.** → 2R

FIG. 5.

INPUT LEVEL (dB)

100 % MODULATION

OUTPUT LEVEL (dB)

COMPRESSION

S' DIFFERENCE SIGNAL

S DIFFERENCE SIGNAL

EXPANSION

≈ 26 dB

FIG. 6.

INPUT LEVEL (dB)

COMPRESSION

S+S'

S' COMPRESSED DIFFERENCE SIGNAL

S NORMAL DIFFERENCE SIGNAL

EXPANSION

OUTPUT LEVEL (dB)

## FIG. 8.

S=(L-R) →

ADDER + [84]

S'= f(L-R) →

S+S' →

SUBTRACTOR [90]

S' →

S →

DE-EMPH. (OPTIONAL) [87]

S →

TO DE-MATRIXER

[86]

VARIABLE GAIN ELEMENT [26']

CONTROL SIGNAL

[34']

FULL WAVE RECTIFIER [28']

→ V_REF [30']

→ INTEGRATOR (COMPLEX) [32']

## FIG. 9.

RECEIVER/ DEMODULATOR [100]

BAND PASS FILTER [106]

LOW PASS FILTER [102]

CARRIER GEN. [110]

PILOT

$\sin(wt+45°)$

DEMODULATOR [108]

M

$\sqrt{S^2 + S'^2} = f_1(L-R)$

DEMATRIXER [104]

S

EXPANDER [86]

DE-EMPH. (OPTIONAL) [112]

75 μ sec. DE-EMPH. [106]

75 μ sec. DE-EMPH [108]

○ 2L

○ 2R

4

FIG. 10.

INPUT LEVEL (dB)

OUTPUT LEVEL (dB)

(S+ S')

≈ 26 dB

FIG. 11.

INPUT LEVEL (dB)

OUTPUT LEVEL (dB)

$\sqrt{S^2 + S'^2}$

≈ 26 dB

## FIG. 12.

## FIG. 12A.

## FIG. 13.

## FIG. 13A.

## FIG. 14.

# FIG. 15

$$0.45M + 0.45\,S\sin wt + 0.45\,S'\cos wt + 0.1\sin\frac{wt}{2}$$

FIG. 16

FIG. 17

FIG. 18

FIG. 20

NOISE REDUCED
AND FREQUENCY
CORRECTED

FIG. 19

NOISE-REDUCED AND FREQUENCY CORRECTED S SIGNAL

FIG. 21